(19)

**Europäisches Patentamt**
**European Patent Office**
**Office européen des brevets**

(11) **EP 1 446 813 B1**

(12) **EUROPÄISCHE PATENTSCHRIFT**

(45) Veröffentlichungstag und Bekanntmachung des Hinweises auf die Patenterteilung:
**10.11.2010 Patentblatt 2010/45**

(21) Anmeldenummer: **03740130.4**

(22) Anmeldetag: **08.05.2003**

(51) Int Cl.:
*G21K 7/00* (2006.01)     *G21K 1/06* (2006.01)

(86) Internationale Anmeldenummer:
**PCT/EP2003/004803**

(87) Internationale Veröffentlichungsnummer:
**WO 2003/096356 (20.11.2003 Gazette 2003/47)**

(54) **REFLEKTIVES ROENTGENMIKROSKOP ZUR UNTERSUCHUNG VON OBJEKTEN MIT WELLENLAENGEN = 100NM IN REFLEXION**

REFLECTIVE X-RAY MICROSCOPE FOR EXAMINING OBJECTS WITH WAVELENGTHS OF = 100NM IN REFLECTION

MICROSCOPE AUX RAYONS X REFLECHISSANT CONCUS POUR EXAMINER DES OBJETS PRESENTANT DES LONGUEURS D'ONDE = 100NM EN REFLEXION

(84) Benannte Vertragsstaaten:
**AT BE BG CH CY CZ DE DK EE ES FI FR GB GR HU IE IT LI LU MC NL PT RO SE SI SK TR**

(30) Priorität: **10.05.2002 DE 10220816**
**10.05.2002 DE 10220815**

(43) Veröffentlichungstag der Anmeldung:
**18.08.2004 Patentblatt 2004/34**

(60) Teilanmeldung:
**04011604.8**
**04013866.1 / 1 455 365**

(73) Patentinhaber:
 • **Carl Zeiss SMT AG**
**73447 Oberkochen (DE)**
 • **Carl Zeiss SMS GmbH**
**07745 Jena (DE)**

(72) Erfinder:
 • **MANN, Hans-Jürgen**
**73447 Oberkochen (DE)**
 • **DINGER, Udo**
**73447 Oberkochen (DE)**
 • **ULRICH, Wilhelm**
**73434 Aalen (DE)**

 • **REINECKE, Wolfgang**
**15783 Zeuthen (DE)**
 • **ENGEL, Thomas**
**99102 Erfurt (DE)**
 • **ZIBOLD, Axel**
**07449 Jena (DE)**
 • **HARNISCH, Wolfgang**
**07778 Lehesten (DE)**
 • **WEDOWSKI, Marco**
**73431 Aalen (DE)**
 • **PAUSCHINGER, Dieter**
**13465 Berlin (DE)**

(74) Vertreter: **Müller, Utz et al**
**Carl Zeiss AG**
**Standort Jena**
**Carl-Zeiss-Promenade 10**
**07745 Jena (DE)**

(56) Entgegenhaltungen:
**US-A- 5 153 898     US-A- 5 177 774**
**US-B1- 6 244 717     US-B1- 6 522 717**

 • **PATENT ABSTRACTS OF JAPAN Bd. 2000, Nr. 21, 3. August 2001 (2001-08-03) & JP 2001 116900 A (NIKON CORP), 27. April 2001 (2001-04-27) in der Anmeldung erwähnt**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft ein reflektives Röntgenmikroskop nach Patentanspruch 1 zur Untersuchung eines Objektes in einer Objektebene in Reflexion, wobei das Objekt mit Strahlen einer Wellenlänge < 100 nm, insbesondere < 30 nm beleuchtet und in eine Bildebene vergrößert abgebildet wird. Ein derartiges reflektives Röntgenmikroskop umfaßt ein im Strahlengang von der Objektebene zur Bildebene angeordnetes erstes Subsystem, das wenigstens ein erstes optisches abbildendes Element, vorzugsweise einen ersten Spiegel umfaßt. Röntgenmikroskope sind aus nachfolgenden Anmeldungen bekannt geworden:

US 5,222,113
US 5,311,565
US 5,177,774
US 5,144,497
US 5,291,339
US 5,131,023
EP 0 459 833

Ein Schwarzschild-System mit nachgeordnetem Beugungsgitter ist aus der

US 5,022,064

bekannt geworden und ein Inspektionssystem mit reflektivem Röntgenstrahlmikroskop aus der

JP 2001116900.

Die Anmeldungen US 5,222,113, US 5,311,565, US 5,177,774, EP 0 459 833 zeigen Röntgenstrahlmikroskope, bei denen in der Projektionsoptik Zonenplatten für die Abbildung vorgesehen sind. Bei Fresnelschen Zonenplatten handelt es sich um ein wellenoptisch abbildendes Bauelement, bei dem das Licht an einem System aus konzentrisch angeordneten Kreisringen gebeugt wird. Der Nachteil der Verwendung von Fresnelschen Zonenplatten in den abbildenden Systemen mit mehreren optischen Elementen im Bereich der Röntgenstrahlung ist darin zu sehen, daß Fresnelsche Zonenplatten transmittive Bauteile sind, die aufgrund der schlechten Transmission im Röntgenbereich zu großen Lichtverlusten führen.

Aus den US-Patenten US 5,144,497, US 5,291,339, US 5,131,023 sind Röntgenstrahlmikroskope umfassend Schwarzschild-Systeme als abbildende Systeme bekannt geworden.

Bei sämtlichen in den US-Patenten US 5,144,497, US 5,291,339 und US 5,131,023 beschriebenen Röntgenstrahlmikroskopen ist der Strahlengang am zu untersuchenden Objekt telezentrisch ausgelegt, was eine Abbildung von Objekten in Reflexion erschwert.

Ein weiterer Nachteil derartiger Systeme für einen Einsatz zur Untersuchung von Objekten, insbesondere solchen, die im Bereich der Röntgenlithographie Verwendungen finden, ist deren große Baulänge zur Erzielung eines ausreichenden Abbildungsmaßstabes. Dies erschwert die Verwendung beispielsweise in Inspektionssystemen zur Untersuchung von Masken in EUV-Projektionsbelichtungs-anlagen.

Aus der US 5,022,064 ist ein Schwarzschild-System bekanntgeworden, bei dem nach dem Schwarzschild-System ein Beugungsgitter angeordnet ist, um Röntgenstrahlung unterschiedlicher Wellenlänge in unterschiedlichen Ordnungen zu beugen und so das Licht spektral aufzuspalten. Auch dieses System ist telezentrisch am Objekt.

Ein reflektives Röntgenstrahlmikroskop zur Untersuchung eines Objektes für die Mikrolithographie in einer Objektebene mit Strahlung einer Wellenlänge < 100 nm, insbesondere < 30 nm, ist aus der JP 2001116900 bekanntgeworden. Das in dieser Anmeldung offenbarte Röntgenstrahlmikroskop ist ein Schwarzschild-System mit einem konkaven ersten Spiegel und einem konvexen zweiten Spiegel. Im Gegensatz zu, den zuvor beschriebenen Systemen ist der Strahlengang zur Untersuchung des Objektes am Objekt nicht telezentrisch, so daß eine Untersuchung in Reflexion, beispielsweise von EUV-Reflexionsmasken, ermöglicht wird.

Nachteilig an dem in der JP 2001116900 offenbarten System ist, daß es eine sehr große Baulänge aufweist, wenn große Abbildungsmaßstäbe gefordert werden.

Aus der US 6,522,717 ist ein Röntgenmikroskop zur Verwendung in einem Inspektionssystem bekannt geworden, das insgesamt zwei Spiegel umfasst.

Die nachveröffentlichte EP 1300676 A1 zeigt ebenfalls ein Röntgenmikroskop in einem Inspektionssystem, wobei das Röntgenmikroskop neben zwei abbildenden Spiegeln einen teildurchlässigen Spiegel aufweist, der dazu dient, reflektiertes Licht auf einem Detektor auszukoppeln.

Aufgabe der Erfindung ist es, die Nachteile des Standes der Technik zu vermeiden, insbesondere die der JP 2001116900, und ein reflektives Röntgenstrahmmikroskop nach patentanspruch 1 anzugeben, das die Untersuchung von Objekten für die Mikrolithographie ermöglicht und eine kurze Baulänge aufweist. Bevorzugt soll die Baulänge des Röntgenstrahlmikroskops weniger als 5 m, insbesondere bevorzugt weniger als 3 m bei einer Vergrößerung von 10 -10000 x, bevorzugt 300 -1000 x betragen.

In einem weiteren Aspekt wird ein Inspektionssystem mit einem erfindungsgemäßen Röntgenmikroskop angegeben, das insbesondere die Untersuchung von Masken für photolithographische Prozesse mit Wellenlängen < 100 nm, bevorzugt im Wellenlängenbereich 10 - 30 nm, ermöglicht.

Inspektionssysteme, insbesondere für die Untersuchung von Transmissionsmasken für photolithographische Prozesse mit Wellenlängen im UV-Bereich, sind aus

EP-A-0628806
JP-A-4-321047

bekannt geworden. In diesen Systemen ist allerdings nur die Untersuchung von Transmissionsmasken beschrieben; eine Untersuchung von Reflexionsmasken, wie in der EUV-Lithographie verwendet, ist nicht erwähnt.

Die Aufgabe ein Röntgenstrahlmikroskop anzugeben, das die Untersuchung von Objekten für die Mikrolithographie ermöglicht und eine kurze Baulänge aufweist wird durch eine Aufteilung des Röntgenstrahlmikroskops in ein erstes und ein zweites Subsysteme gelöst, wobei hierfür verschiedene Ausgestaltungen möglich sind.

In einer Ausgestaltung der Erfindung wird erfindungsgemäß die Aufgabe dadurch gelöst, daß dem ersten Subsystem, umfassend einen ersten und einen zweiten Spiegel, der bevorzugt in Form eines Schwarzschild-Systems ausgebildet ist, ein zweites Subsystem im Lichtweg nachgeordnet ist, das wenigstens einen dritten Spiegel umfaßt. Dieser dritte Spiegel ermöglicht es, den Strahlengang vom Objekt zum Bild zu falten und so die Baulänge gegenüber dem aus der JP 2001116900 bekannten System erheblich zu reduzieren.

Systeme mit mehr als zwei Spiegeln sind im Bereich der EUV-Lithographie für Projektionsobjektive bekannt geworden.

Derartige Systeme zeigen beispielsweise die US 5,063,586, US 5,153,898, US 4,798,450 oder die EP 0962830.

Da es sich bei all diesen Systemen um Reduktionsobjektive handelt, kann keine dieser Schriften einen Anhalt dafür geben, wie ein System ausgelegt werden muß, mit dem das Objekt vergrößernd in eine Bildebene abgebildet wird.

Insbesondere stellt sich bei diesen Objektiven nicht das Problem, eine möglichst kurze Baulänge zu erreichen; vielmehr stehen die Abbildungseigenschaften im Vordergrund.

Der wenigstens eine dritte Spiegel des zweiten Subsystems dient, wie zuvor ausgeführt, zur Faltung des Strahlengangs sowie zur Einstellung eines nahezu telezentrischen Strahlengangs am Bild.

Besonders bevorzugt ist es, wenn das zweite Subsystem insgesamt zwei Spiegel umfaßt, die für eine Verringerung der Baulänge sorgen, Insbesondere ist es bei einer derartigen Anordnung möglich, die im Bereich des zweiten Spiegels des ersten Subsystems und der Bildebene auftretenden Bauraumkonflikte zu lösen, da Objektebene und Bildebene bei einem Vierspiegel-System räumlich sehr weit voneinander getrennt sind und zudem außerhalb und auf gegenüberliegenden Seiten des Objektives liegen.

Vorteilhafterweise ist der Strahlengang am Bild nahezu telezentrisch.

Bevorzugt sind der erste und der zweite Spiegel des ersten Subsystems asphärisch geformt, der dritte und der vierte Spiegel können sowohl jeweils asphärisch als auch sphärisch geformt sein. Sphärische Spiegel werden hierfür bevorzugt, da sie fertigungstechnisch einfacher herzustellen sind.

Um eine ausreichende Vergrößerung des zu untersuchenden Objektes in der Bildebene zu gewährleisten, weist das Gesamtsystem einen Abbildungsmaßstab von $\beta \geq 10$ x, bevorzugt im Bereich 300 x $\leq \beta \leq$ 1000 x auf.

Das reflektive Röntgenstrahlmikroskop kann entweder im Strahlengang von der Objektebene zur Bildebene ohne oder mit einem reellen Zwischenbild ausgebildet werden. Ausgestaltungen mit Zwischenbild haben den Vorteil, daß erstes und zweites Subsystem gegeneinander verfahren werden können und so Bilder oberhalb und unterhalb der Zwischenbildfokusebene aufgenommen werden können, die z.B. bei Maskeninspektionen Informationen über Maskendefekte liefern, wie nachfolgend beschrieben.

Bei der Ausbildung eines reellen Zwischenbilds im Lichtweg nach dem ersten Subsystem wird in den nachfolgend beschriebenen Ausgestaltungen der Erfindung die Aufgabe dadurch gelöst, daß dem ersten Subsystem, umfassend wenigstens ein erstes optisches Element, ein zweites Subsystem im Lichtweg nachgeordnet ist, so daß das Zwischenbild in der Zwischenbildebene in ein vergrößertes Bild in der Bildebene abgebildet wird.

Das zweite Subsystem kann in einer weiteren Ausgestaltung ein Photoemissions-Elektronenmikroskop (PEEM) umfassen. Das erste Subsystem muß dann lediglich eine niedrige erste Vergrößerung, beispielsweise einen ersten Abbildungsmaßstab von 0,1 x -100 x, bevorzugt 1 x -10 x, aufweisen. Das PEEM kann als Zoom-Objektiv mit variabler Vergrößerung ausgebildet sein.

Die notwendige Vergrößerung des Gesamtsystems auf $\geq 10$ x, insbesondere 300 - 10000 x von der Objektebene bis zur Bildebene wird durch das Photoemissions-Elektronenmikroskop zur Verfügung gestellt. Auf diese Art und Weise kann die Baulänge des Gesamtsystems gegenüber dem aus der JP 2001116900 bekannten System erheblich reduziert werden.

Photoemissions-Elektronenmikroskope, sogenannte PEEM's sind im Stand der Technik beschrieben und werden beispielsweise von der Firma Focus GmbH, D-65510 Hünstetten-Görsroth gebaut und vertrieben. Diesbezüglich wird auf die Webpage http://www.focus-gmbh.com verwiesen. Das beispielhaft auf dieser Internet-Seite beschriebene Photoemissions-Elektronenmikroskop, ist kein Mikroskop, bei dem Licht für die Bildentstehung sorgt, sondern Elektronen. Bei Photoemissions-Elektronenmikroskopen wird das zu untersuchende Objekt mit abbildender Elektronenoptik, umfassend elektrostatische Linsen, abgebildet. Die bild erzeugenden Elektronen werden im vorliegenden Fall durch die Bestrahlung einer Photoelektrode, beispielsweise einer Photokathode, die in oder nahe der Zwischenbildebene angeordnet ist, mit Röntgenstrahlung ausgelöst und durch das Linsensystem auf eine Vielkanalplatte zur Verstärkung abgebildet. In vorliegender Anmeldung wird unter einer Anordnung nahe der Zwischenbildebene ein Abstand von $\leq 10 \cdot \dfrac{\lambda}{NA'^2}$, bevorzugt $\leq 5 \cdot \dfrac{\lambda}{NA'^2}$, wobei $\lambda$ die Wellenlänge des einfallenden Lichtes ist und

$$NA' = \frac{NA}{\beta_1},$$ wobei NA die numerische Apertur des Abbildungssystems und $\beta_1$ der Abbildungsmaßstab des ersten Subsystems ist. Die mit Hilfe der Vielkanalplatte vervielfachten Elektronen können beispielsweise auf einem hinter der Vielkanalplatte positionierten Phosphorschirm in sichtbares Licht umgewandelt und beispielsweise mit einer CCD-Kamera beobachtet werden. Mit Photoemissions-Elektronenmikroskopen könnten laterale Auflösungen von 20 nm erreicht werden.

Alternativ zur Abbildung des Zwischenbildes in ein vergrößertes Bild in der Bildebene mittels eines Photoelektronenmikroskops, kann auch ein zweites Subsystem vorgesehen sein, das in oder nahe der Zwischenbildebene eine Fluoreszenzplatte umfaßt und ein dieser nachgeordnetes Linsensystem für längerwelliges Licht. Durch das auf die Fluoreszenzplatte auftreffende Röntgenlicht wird Fluoreszenzstrahlung im Bereich längerwelligen Lichtes erzeugt. Diese Fluoreszenzstrahlung kann dann mit einem optischen Abbildungssystem, beispielsweise einem Linsensystem oder einer Fresnel-Zonenplate oder einem beliebigen diffraktiven optischen Element in die Bildebene abgebildet werden.

Als erstes Subsystem sind alle zu einer abbildenden Optik gehörenden EUVoptischen Elemente denkbar, beispielsweise Spiegel mit Vielfachbeschichtung, Zonenplatten oder diffraktiv optische Elemente.

Bevorzugt umfaßt das erste Subsystem zwei Spiegel, einen ersten Spiegel S1 und einen zweiten Spiegel S2. Der erste Spiegel ist bevorzugt ein Konkavspiegel und der zweite Spiegel ein Konvexspiegel. Bevorzugt sind erster und zweiter Spiegel asphärisch geformt.

Das zweite Subsystem dient bevorzugt dazu, das Zwischenbild in der Zwischenbildebene vergrößert in ein Bild in der Bildebene abzubilden. Infolgedessen ist der Abbildungsmaßstab dieses zweiten Subsystems groß und beträgt $\beta_2 \geq 3$ x. Bevorzugt liegt er im Bereich 50 x $\leq \beta_2 \leq 500$ x. Der Abbildungsmaßstab des zweiten Subsystems wird in vorliegender Anmeldung durch die Abbildung des Zwischenbildes in der Zwischenbildebene in ein vergrößertes Bild in der Bildebene definiert. Als zweites Subsystem sind möglich: Photoemissions-Elektronenmikroskope (PEEM), Floureszenzkonverter mit nachgeschalteten optischen Mikroskopen oder andere Konvertermikroskope, die Röntgenlicht zur Weiterverarbeitung in abbildenden Systemen auf einen anderen Abbildungsträger, beispielsweise längerwellige Photonen; Elektronen oder Ionen wandeln können.

Bevorzugt weist das erfindungsgemäße reflektive Röntgenmikroskop eine optische Achse auf, zu der die Spiegel des Mikroskopes zentriert angeordnet sind.

Im Gegensatz zu den aus den US-Patenten bekannten Röntgenstrahlmikroskopen ist das Objekt in der Objektebene bei dem erfindungsgemäßen reflektiven Röntgenmikroskop bevorzugt außerhalb der optischen Achse angeordnet. Dies ermöglicht die Untersuchung von Objekten in Reflexion, beispielsweise reflektierenden EUV-Masken, ohne daß Objekt- und Bildebene zueinander verkippt angeordnet sind, d. h., sowohl die Objektebene wie die Bildebene stehen senkrecht auf der optischen Achse des reflektiven Röntgenobjektives. Hierdurch können Bildfehler minimiert werden, da hierdurch ein einheitlicher Abbildungsmaßstab für alle Feldpunkte in alle Richtungen erreicht wird.

Besonders vorteilhaft ist es, wenn zur Einstellung der numerischen Apertur das reflektive Röntgenmikroskop eine Aperturblende umfaßt. Um verschiedene numerische Aperturen einstellen zu können, ist es von Vorteil, wenn die Aperturblende zugänglich ist. Eine vorteilhafte Anordnung der Aperturblende ist daher eine Anordnung im Strahlengang von der Objekt- zur Bildebene im ersten Subsystem hinter der Objektebene und vor dem ersten Spiegel. Die Aperturblende ist dezentriert zur optischen Achse angeordnet. Die Blende ermöglicht bevorzugt die Einstellung verschiedener Aperturstufen mit der unterschiedliche numerische Aperturen der Projektionsbelichtungsanlage simuliert werden können.

In einem Aspekt wird ein Inspektionssystem mit einem Röntgenmikroskop für Untersuchung von Objekten, insbesondere Masken für die Mikrolithographie mit Wellenlängen $\leq 100$ nm zur Verfügung gestellt. Das Inspektionssystem umfaßt ein Beleuchtungssystem zur Ausleuchtung eines Objektfeldes in einer Objektebene. Als Lichtquelle umfaßt das Beleuchtungssystem bspw. eine Entladungsquelle, Laser-Plasma-Gluelle oder Synchotronquelle. Die gewünschte Strahlung von beispielsweise 13.5 nm kann mit Gitterspektralfiltem ausgefiltert werden. In der Objektebene ist innerhalb des ausgeleuchteten Feldes wenigstens ein Teil der zu untersuchenden Maske angeordnet. Des weiteren umfaßt das Inspektionssystem ein Abbildungssystem für Wellenlängen $\leq 100$ nm zur Abbildung wenigstens eines Teils der zu untersuchenden Maske in eine Bildebene. In der Bildebene ist ein Beobachtungssystem zur Beobachtung des in diese Ebene vergrößert abgebildeten Objektes vorgesehen.

In dem Inspektionssystem ist das Abbildungssystem ein erfindungsgemäßes reflektives Röntgenmikroskop.

Das Inspektionssystem umfaßt vorzugsweise Positioniereinrichtungen zum Positionieren des Objektes in der Objektebene. Dadurch ist es möglich, ganz gezielt bestimmte Teile des zu untersuchenden Objektes in der Objektebene zu verfahren und so Bilder von unterschiedlichen Teilen des Objektes in der Bildebene aufzunehmen.

In einer bevorzugten Ausführungsform umfaßt das Abbildungssystem eine zugängliche, einstellbare Aperturblende. Die einstellbare Aperturblende ermöglicht es, die Apertur so einzustellen, daß die Abbildungsverhältnisse am Objekt äquivalent sind zu den Abbildungsverhältnissen in einer Projektionsbelichtungsanlage. Projektionsbelichtungsanlagen für die EUV-Lithographie sind beispielsweise aus der WO 02/27401, der WO 02/27402 oder der US 6,244,717 bekannt geworden, deren Offenbarungsgehalt vollumfänglich in die vorliegende Anmeldung miteingeschlossen wird. Die möglichen Obskurationen in einer EUV-Projektionsbelichtungsanlage können durch eine Obskurationsblende, die beispielsweise im Beleuchtungssystem des Inspektionssystems angeordnet ist, simuliert werden.

Weist die Projektionsbelichtungsanlage beispielsweise ein Projektionsobjektiv mit einer bildseitigen NA von 0,3 und mit einer Vergrößerung von 4 x auf, so beträgt die an der einstellbaren Aperturblende vorzuwählende Apertur 0,3 : 4, d. h. 0,075, um eine der Abbildung in dem Projektionssystem entsprechende Abbildung im Inspektionssystem zu erhalten.

Die einstellbare Aperturblende kann frei in einem Bereich $0{,}001 \leq NA \leq 0{,}25$ eingestellt werden.

Neben der einstellbaren Aperturblende im Abbildungssystem kann in einer bevorzugten Ausführungsform der Erfindung vorgesehen sein, daß auch das Beleuchtungssystem eine einstellbare Beleuchtungsaperturblende umfaßt.

Mit Hilfe der Beleuchtungsaperturblende im Beleuchtungssystem, die in einer Ebene, die konjugiert zu der Ebene der Aperturblende der Abbildungsoptik angeordnet ist, kann die Größe der Pupillenfüllung σ vorgegeben werden. Die Pupillenfüllung ist definiert als:

$$\sigma = \frac{\sin \alpha}{\sin \beta},$$

wobei $\sin \alpha$ der numerischen Apertur $NA_{Beleuchtung}$ des Beleuchtungssystems am Objekt und $\sin \beta$ der numerischen Apertur $NA_{Abbildung}$ des Abbildungssystems am Objekt entspricht. Die Einstellung von σ erlaubt es, verschiedene Arten von Beleuchtungssystemen für Projektionsbelichtungsanlagen zu simulieren. Während Aperturblende und Beleuchtungsaperturblende wie oben beschrieben die Einstellung einer kreisförmigen Ausleuchtung mit einem vorbestimmten Pupillenfüllungsgrad σ bei Verwendung kreisförmiger Blenden ermöglichen, ist es durch das Einbringen eines Stendenwechsiers, beispielsweise eines Blendenrades, in die Beleuchtungsaperturblendenebene möglich, auch eine annulare, quadrupolare oder eine dipolare Befeuchtung zu simulieren. Zur Begrenzung des Feldes kann in einer zur Objektebene konjugierten Ebene eine Feldblende vorgesehen sein.

Bevorzugt weist das Bildaufnahmesystem des Inspektionssystems, eine Analyseeinheit auf, mit der die Bilder des Objektes in der Bildebene ausgewertet werden können.

Um neben einer Simulation der Eigenschaften der Projektionsbetichtungsanlage, die in einer speziellen Ausgestaltung auch als Stepper ausgelegt ist, eine qualitative und quantitative Inspektion der Masken zu ermöglichen, umfaßt das Inspektionssystem bevorzugt Fokuseinstelleinrichtungen, mit denen das Objekt in senkrechter Richtung zur Objektebene verfahren werden kann. Dies ermöglicht die Aufnahme von Bildern ein und derselben Steile auf dem Objekt an vorbestimmten Fokuspositionen. Bevorzugt wird der Fokus von unten nach oben in vorbestimmten Schritten symmetrisch durchfahren. Die an verschiedenen Fokuspositionen aufgenommenen Bilder können mit Hilfe der Analyseeinheit ausgewertet und so mindestens eine Aussage über die Qualität der Maske getroffen werden. Hat die Maske an der untersuchten Stelle Defekte, so ermöglicht es die Analyseeinheit, diese genau zu analysieren. Gegebenenfalls kann die Maske repariert und anschließend neu analysiert werden.

Bevorzugt umfaßt die Analyseeinheit eine Mikrocomputereinrichtung, in der die aufgenommenen Bilddaten digital verarbeitet werden können.

Eine besonders bevorzugte Ausführungsform der Erfindung umfaßt ein parallel zum ersten Abbildungssystem angeordnetes zweites Abbildungssystem für Wellenlängen > 100 nm. Dieses zweite Abbildungssystem ermöglicht es, beispielsweise mit UV- oder VUV-Licht bspw. der 1-Linie die Maske im Gesamten zunächst grob zu inspizieren. Bevorzugt ist ein derartiges Hilfsbeobachtungssystem parfokal und/oder parzentriert angeordnet. Die gesamte Maske kann beispielsweise eine Abmessung von 6" x 6" (152 x 152 mm) aufweisen und das Objektfeld $\leq$ 2 x 2 mm, so daß eine grobe Inspektion der gesamten Maske möglich ist. Die Maske kann dann mit Hilfe der Positioniereinrichtung an Stellen verbracht werden, an denen Defekte auftreten. Mit Hilfe der Abbildungsoptik für Wellenlängen $\leq$ 100 nm ist es möglich, diese ausgewählten Stellen zu untersuchen. Das Objektfeld, mit dem das Abbildungssystem für Wellenlängen s 100 nm untersucht werden kann, liegt im Bereich 100 x 100 $\mu$m, besonders bevorzugt 30 $\mu$m x 30 $\mu$m.

In einer besonders bevorzugten Ausführungsform der Erfindung ist das zweite Subsystem tauschbar bzw. auswechselbar ausgeführt. Durch Auswechseln des zweiten Subsystems kann das Objektfeld vergrößert und die Maske im Gesamten zunächst grob inspiziert werden. Die gesamte Maske kann beispielsweise eine Abmessung von 6" x 6" (152 x 152 mm) aufweisen und das Objektfeld $\leq$ 2 x 2 mm, so daß eine grobe Inspektion der gesamten Maske möglich ist. Die Maske kann dann mit Hilfe der Positioniereinrichtung an Stellen verbracht werden, an denen Defekte auftreten. Mit Hilfe eines anderen zweiten Subsystems mit kleinerem Objektfeld und größerer Vergrößerung können diese ausgewählten Stellen näher untersucht werden. Das Objektfeld liegt bevorzugt im Bereich 100 $\mu$m x 100 $\mu$m, besonders bevorzugt 30 x 30 $\mu$m.

Bei Systemen, bei denen das zweite Subsystem als Photoemissions-Elektronenmikroskop ausgebildet ist und eine variable Vergrößerung, d.h. eine Zoom-Wirkung, im Bereich von bspw. 40 bis 4000 x aufweist, können verschieden große Objektfelder durch Einstellen der Vergrößerung des Photoemissions-Elektronenmikroskopes untersucht werden.

Bevorzugt ist zumindest der abbildende Teil für Wellenlängen ≤ 100 nm des Inspektionssystems, bspw. das erste Subsystem in einem für EUV-Anwendungen geeigneten Vakuum angeordnet.

Neben dem Inspektionssystem wird auch ein Verfahren zur Inspektion von Objekten, insbesondere Masken für die Mikrolithographie mit Wellenlängen ≤ 100 nm, zur Verfügung gestellt, bei dem in der Objektebene mit einem Beleuchtungssystem ein Objektfeld ausgeleuchtet wird, das zu untersuchende Objekt mit Positioniereinrichtung in das ausgeleuchtete Objektfeld verbracht wird und in eine Bildebene, in der ein Bildaufnahmesystem angeordnet ist, mittels eines Abbildungssystems für Wellenlängen ≤ 100 nm abgebildet wird. Zur Charakterisierung der Masken wird in einem bevorzugten Verfahren das zu untersuchende Objekt mit einer Fokuseinstellvorrichtung senkrecht zur Objektebene verfahren und Bilder an vorbestimmten Fokuspositionen oberhalb und unterhalb des Fokus aufgenommen und ausgewertet.

Bei Systemen mit Zwischenbild kann alternativ oder zusätzlich das zweite Subsystem relativ zum Fokus des Zwischenbildes verfahren werden, um Bilder an vorbestimmten Fokuspositionen aufzunehmen. Alternativ könnte auch die gesamte Abbildungsvorrichtung oder nur das erste Subsystem in Richtung der Achse, die senkrecht auf der Objektebene steht, verfahren werden.

Die Verwendung des Inspektionssystems ist vielfältig. So ist ein derartiges Inspektionssystem, wie zuvor eingehend beschrieben, zur Defektanalyse von Maskenrohlingen, beschichteten Maskenrohlingen, Masken im Fertigungsprozeß für die Mikrolithographie mit Wellenlängen ≤ 100 nm geeignet, wie auch zur Kontrolle der Reparatur von Masken. Auch eine Kontrolle des Maskenalterungsprozesses ist möglich. Des weiteren kann mit einem derartigen Inspektionssystem der Belichtungsprozeß in einer Projektionsbelichtungsanlage durch Einstellung der Apertur und des Pupillenfüllgrades simuliert und damit die Projektionsbelichtungsanlage konfiguriert und optimiert werden. Das Inspektionssystem ist auch zur Inspektion von Wafern geeignet.

Die Erfindung soll nachfolgend anhand der Figuren beschrieben werden.

Es zeigen:

Figur 1: die Gesamtansicht eines erfindungsgemäßen ersten Röntgenmikroskopobjektives mit einem ersten Subsystem, umfassend einen ersten und einen zweiten Spiegel und einem zweiten Subsystem, umfassend einen dritten Spiegel

Figur 2: ein zweites Röntgenmikroskop, umfassend ein erstes Subsystem mit erstem und zweitem Spiegel sowie ein zweites Subsystem, umfassend einen dritten und einen vierten Spiegel.

Figur 3: ein drittes Röntgenmikroskop, umfassend ein erstes Subsystem mit einem ersten und zweitem Spiegel sowie ein zweites Subsystem, umfassend einen dritten und vierten Spiegel, wobei der dritte Spiegel sphärisch ausgestaltet ist und die Blende zwischen Objektebene und erstem Spiegel liegt.

Figur 4: ein viertes Röntgenmikroskop, umfassend ein erstes Subsystems mit erstem und zweitem Spiegel sowie ein zweites Subsystem, umfassend einen dritten und vierten Spiegel, wobei der dritte und vierte Spiegel sphärisch ausgestaltet sind und die Objektfeldgröße 30 μm x 30 μm ist.

Figur 5: ein fünftes Röntgenmikroskop, umfassend ein erstes Subsystem mit erstem und zweitem Spiegel sowie ein zweites Subsystem mit drittem und viertem Spiegel, wobei der dritte und vierte Spiegel sphärisch ausgestaltet sind und das Objektfeld eine Ausdehnung von 200 μm x 30 μm aufweist.

Figur 6: ein sechstes Röntgenmikroskop, umfassend ein erstes Subsystem mit erstem und zweitem Spiegel sowie ein zweites Subsystem, umfassend einen dritten und vierten Spiegel, wobei der dritte und vierte Spiegel sphärisch ausgebildet ist und alle Spiegel Konkavspiegel sind.

Figur 7: ein siebtes Röntgenmikroskop, umfassend ein erstes Subsystem mit erstem und zweitem Spiegel sowie ein zweites Subsystem, umfassend einen dritten und vierten Spiegel, wobei der erste Spiegel ein Konkavspiegel, der zweite Spiegel ein Konkavspiegel, der dritte Spiegel ein Konvexspiegel und der vierte Spiegel ein Konkavspiegel ist.

Figur 8: ein Zweispiegelsystem, wobei der erste Spiegel ein Konkavspiegel und der zweite Spiegel ein Konkavspiegel ist.

Figur 9: die Gesamtansicht eines erfindungsgemäßen ersten Röntgenmikroskopobjektives mit einem ersten Subsystem, umfassend einen ersten und einen zweiten Spiegel und einem zweiten Subsystem, umfassend ein Photoemissions- Elektronenmikroskop.

Figur 10: ein Inspektionssystem für EUV-Masken mit einem erfindungsgemäßen Röntgenmikroskop in schematischer Darstellung

Figur 11: ein Inspektionssystem, wobei die einzelnen Komponenten des Inspektionssystems näher gezeigt sind

Figur 12: Flussdiagramm für die Durchführung einer Messung

Figur 13 mögliche Bearbeitungen der aufgenommenen Bilder

Figur 14a-c mögliche Einsatzgebiete des Inspektionssystems

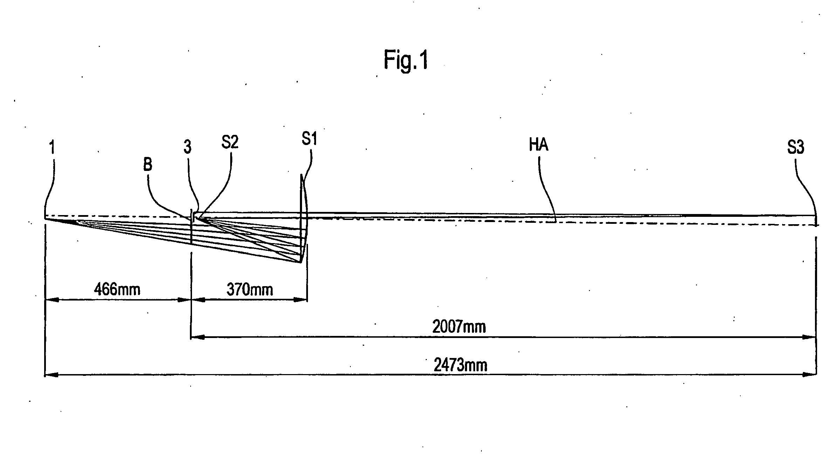

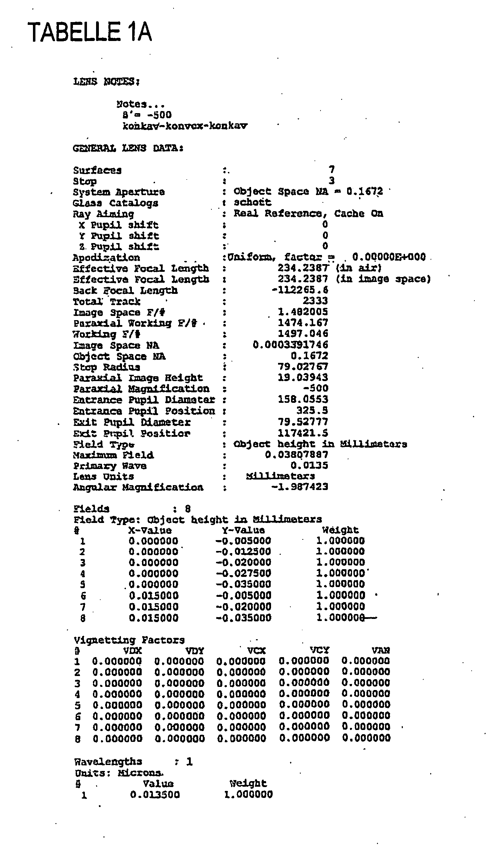

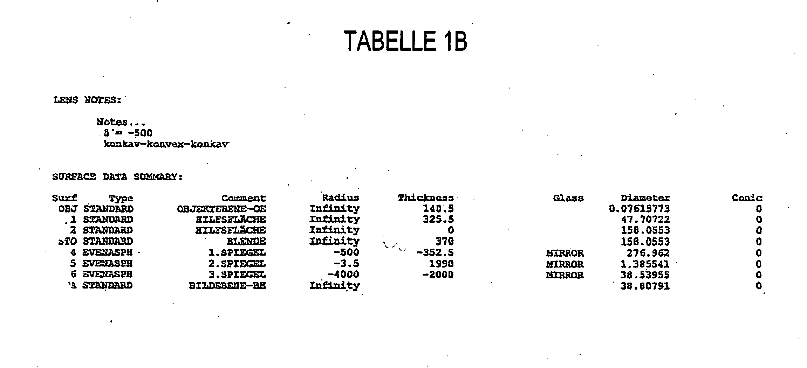

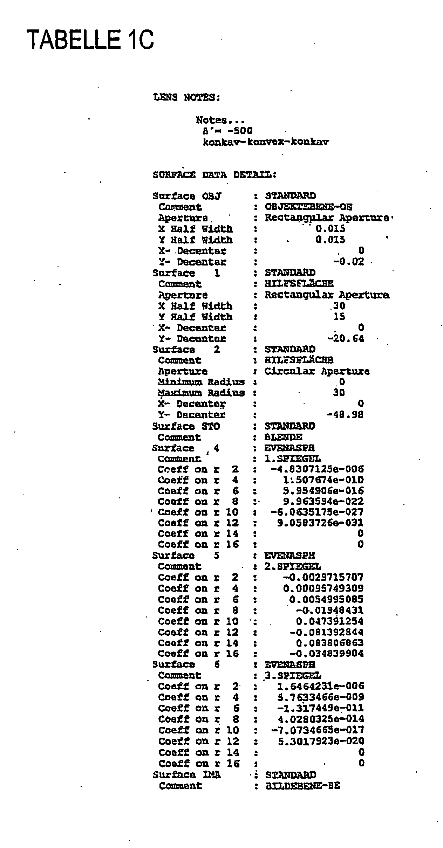

In Figur 1 ist eine erste Ausführungsform der Erfindung gezeigt mit einem ersten Subsystem, umfassend einen ersten Spiegel S1 und einen zweiten Spiegel S2. Der erste Spiegel S1 ist In vorliegendem Ausführungsbeispiel ein Konkavspiegel und der zweite Spiegel S2 ein Konvexspiegel. Die Spiegel S1 und S2 sind zentriert zur optischen Achse HA angeordnet. Das zweite Subsystem umfaßt einen dritten Spiegel S3. Auch der dritte Spiegel ist zentriert zur optischen Achse angeordnet. Das dezentriert zur optischen Achse HA angeordnete Objekt in der Objektebene 1 wird durch das vergrößernd abbildende Röntgenmikroskop gemäß der Erfindung in die Bildebene 3 abgebildet. Die Bildebene 3 liegt in der Nähe des zweiten Spiegels S2 sowie der dezentriert zur optischen Achse zwischen Objektebene und erstem Spiegel angeordneten Aperturblende B.

Sämtliche Spiegelflächen der Spiegel S1, S2 und S3 sind rotationssymmetrische, asphärische Spiegelsegmentflächen.

Der Krümmungsradius des ersten Spiegels beträgt | $R_1$ | = 500 mm, der Radius des zweiten Spiegels | $R_2$ | = 3,5 mm und der des dritten Spiegets | $R_3$ | = 4000 mm. Der zweite Spiegel hat nur einen relativ geringen Krümmungsradius. Dieser ist zur Erzeugung des geforderten großen Abbildungsmaßstabs erforderlich. Die Blende B liegt zwischen Objektebene und erstem Spiegel, in einem Abstand von 466 mm von der Objektebene entfernt und hat eine maximale dezentrierte Öffnung von 60 mm. Die Baulänge des optischen Systems, das heißt der Abstand von der Blendenebene, in der die Aperturblende B angeordnet ist, bis zum dritten Spiegel S3 beträgt 2007 mm und der Abstand von der Objektebene 1 bis zur Aperturblende B 466 mm. Das Gesamtsystem hat einen Abbildungsmaßstab von β = -500x. Objekt und Bild in der Objektebene bzw. in der Bildebene liegt bezogen auf die optische Achse HA dezentriert auf gegenüberliegenden Seiten.

Der Vorteil des vorgestellten Drei-Spiegelsystems ist darin zu sehen, da mit nur drei Spiegeln eine geringe Gesamtbaulänge von weniger als 2500 mm realisiert werden konnte, wobei die Baulänge, das heißt der Abstand der Aperturblende bis zum Scheitelpunkt des dritten Spiegels 2007 mm beträgt sowie der Abstand der Objektebene 1 von der Aperturblende B in der Aperturebene 466 mm beträgt. Die allgemeinen Objektivdaten des Ausführungsbeispiels gemäß Figur 1 können Tabelle 1 a, die Zusammenfassung der Flächendaten Tabelle 1 b und die Details der Flächendaten Tabelle 1 c im Anhang entnommen werden. Sämtliche vorangegangenen und nachfolgenden Tabellen der optischen Daten sind Daten im ZEMAX-Format. Das ZEMAX-Format ist dem Fachmann wohlbekannt.

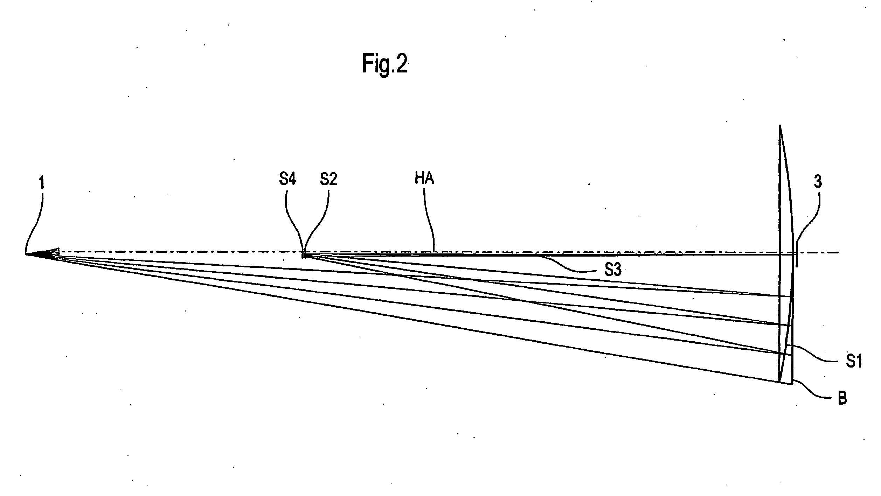

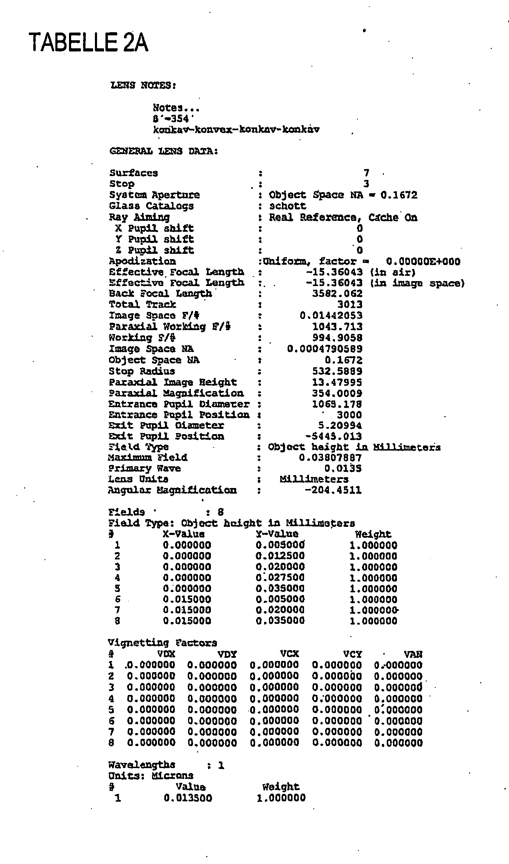

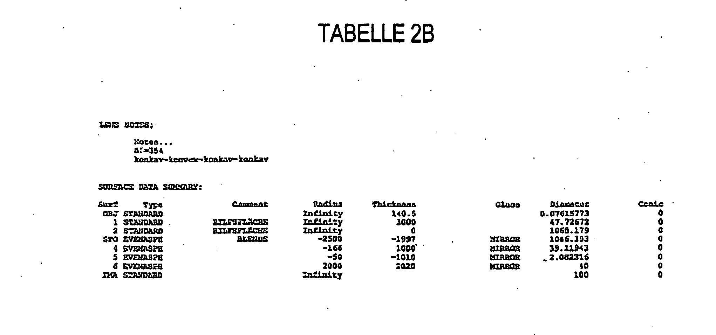

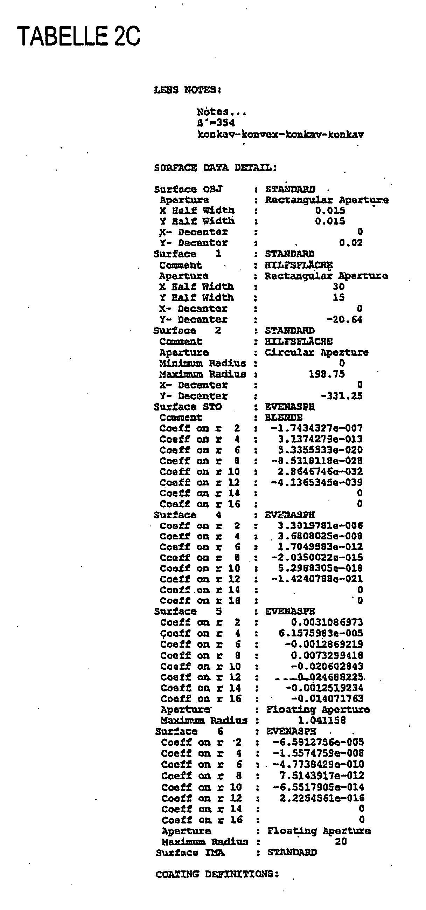

In Figur 2 ist ein Vierspiegel-System gezeigt mit einem ersten Subsystem, umfassend einen ersten Spiegel S1 und einen zweiten Spiegel S2 sowie einem zweiten Subsystem, umfassend einen dritten und einen vierten Spiegel. Der erste Spiegel ist mit der Bezugsziffer S1, der zweite Spiegel mit der Bezugsziffer S2, der dritte Spiegel mit der Bezugsziffer S3 und der vierte Spiegel mit der Bezugsziffer S4 belegt. Bei dem ersten Spiegel S1 handelt es sich um einen Konkavspiegel, bei dem zweiten Spiegel S2 um einen Konvexspiegel, bei dem dritten und vierten Spiegel S3, S4 jeweils um Konkavspiegel. Die Aperturblende B ist bei dem Ausführungsbeispiel mit geringem Abstand vor dem ersten Spiegel S1 angeordnet. Eine derartige Anordnung führt zwangsläufig zu einer geringen Vignittierung Der Abbildungsmaßstab des Gesamtsystems beträgt β = 354, das heißt das Objekt in der Objektebene 1 und das Bild in der Bildebene 3 liegen dezentriert auf der selben Seite zur optischen Achse HA. Die allgemeinen Objektivdaten dieser Ausführungsvariante der Erfindung sind in Tabelle 2a angegeben, die zusammengefassten Flächendaten in Tabelle 2b und die speziellen Flächendaten in Tabelle 2c.

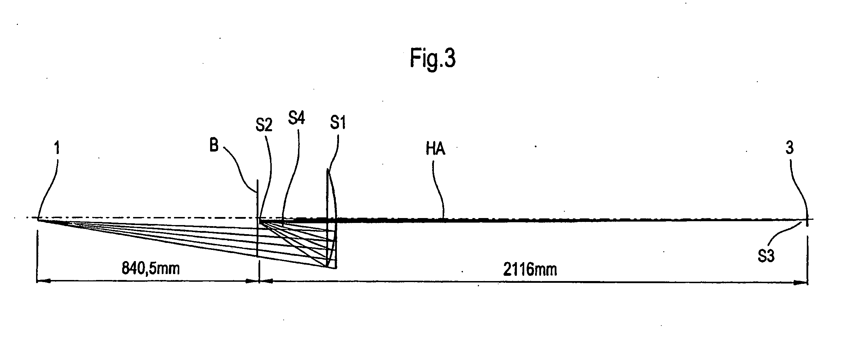

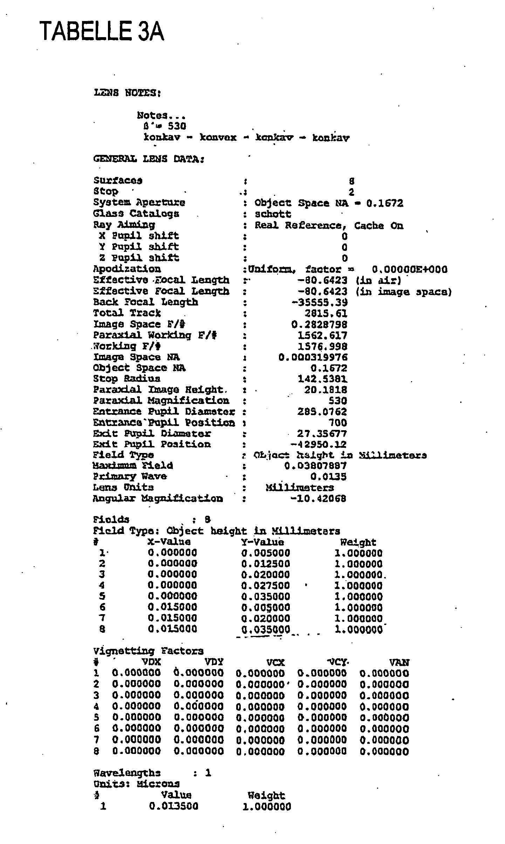

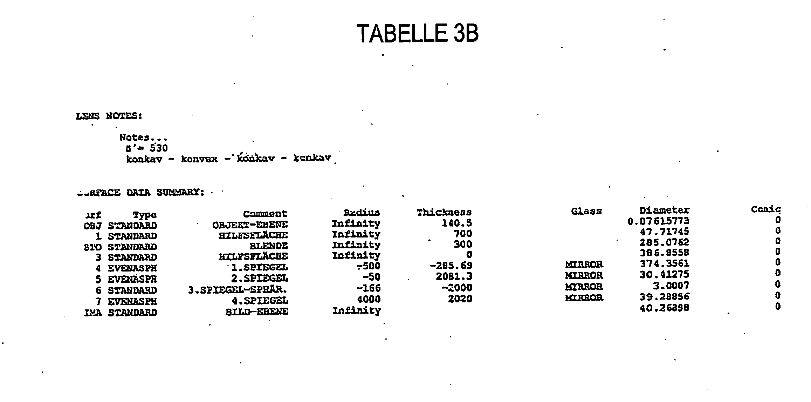

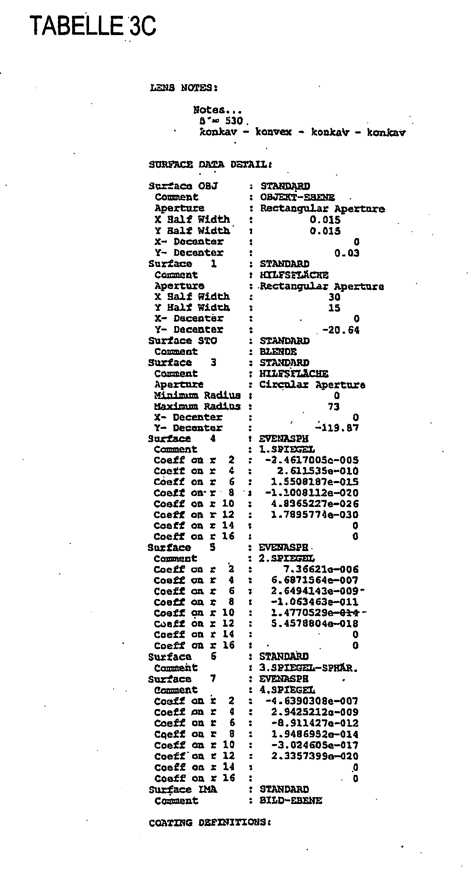

In Figur 3 ist wiederum ein Vierspiegel-System mit einem ersten Spiegel S1, einem zweiten Spiegel S2, einem dritten Spiegel S3 sowie einem vierten Spiegel S4 gezeigt. Gleiche Bauteile wie in den vorangegangenen Figuren werden mit denselben Bezugsziffern belegt.

Der grundsätzliche Aufbau des Systems gemäß Figur 3 ist koaxial mit rotationssymmetrischen sphärischen oder asphärischen Spiegelsegmentflächen. Das Objektfeld ist dezentriert zur optischen Achse HA angeordnet. Alle Spiegel sind rotationssymmetrisch um die optische Achse HA. Der erste Spiegel ist ein Konkavspiegel mit einem Krümmungsradius | $R_1$ | = 500 mm, der zweite Spiegel ist ein Konvexspiegel mit einem Krümmungsradius | $R_2$ | = 50 mm, der dritte Spiegel ist ein Konkavspiegel mit Krümmungsradius | $R_3$ | = 166 mm und der vierte Spiegel S4 ein Konkavspiegel mit Krümmungsradius | $R_4$ | = 4000 mm. Aus fertigungstechnischer Sicht vorteilhaft ist, daß bei der Ausführungsform gemäß Figur 3 der dritte Spiegel S3 sphärisch ist. Die Spiegelflächen der Spiegel S1, S2 und S4 sind hingegen Rotations-Asphären. Die Aperturblende B liegt zwischen der Objektebene 1 und dem ersten Spiegel S1 in einem Abstand von 840,5 mm von der Objektebene 1 entfernt und weist eine maximale dezentrierte Öffnung von 146 mm auf. Die Baulänge des optischen Systems, das ist der Abstand von der Blendenebene B bis zur Bildebene 3 beträgt in vorliegendem Fall 2116 mm. Der Gesamtabbildungsmaßstab des vorliegenden Systems beträgt $\beta$ = 530, das heißt, das Objekt in der Objektebene und das Bild in der Bildebene liegen dezentriert zur optischen Achse HA auf der gleichen Seite.

Die allgemeinen optischen Daten des Systems gemäß Figur 3 sind in Tabelle 3a, die Zusammenfassung der Flächendaten in Tabelle 3b und die speziellen Flächendaten in Tabelle 3c im Anhang angegeben.

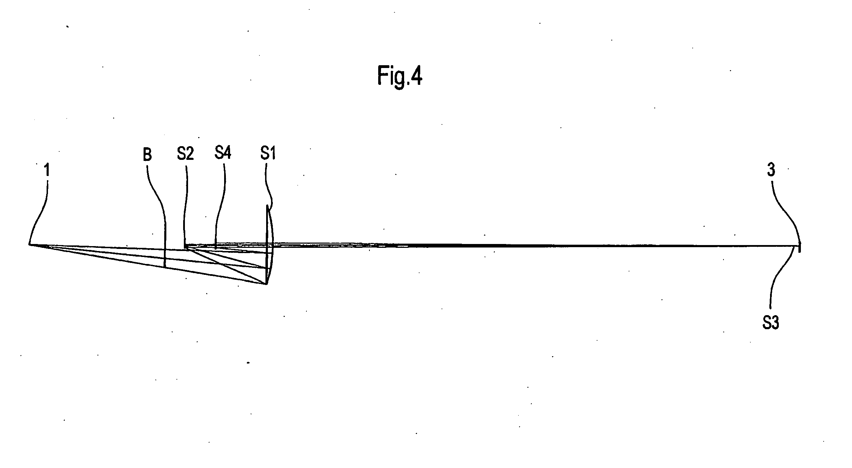

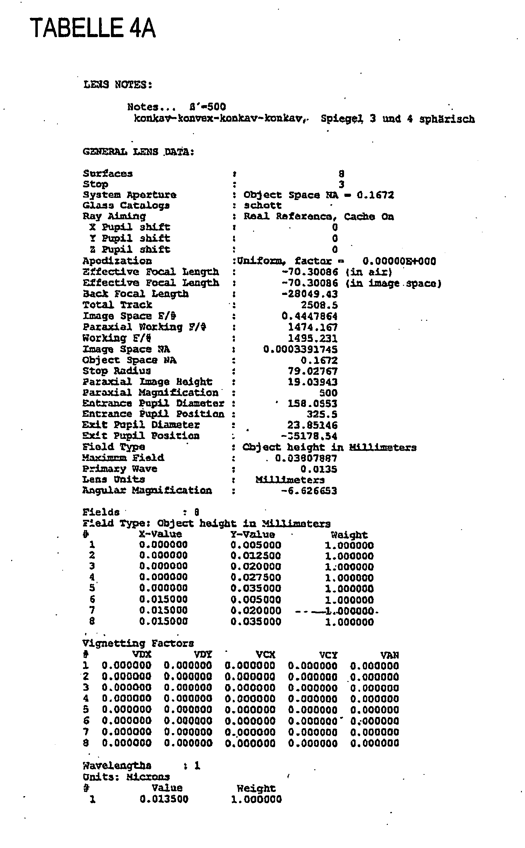

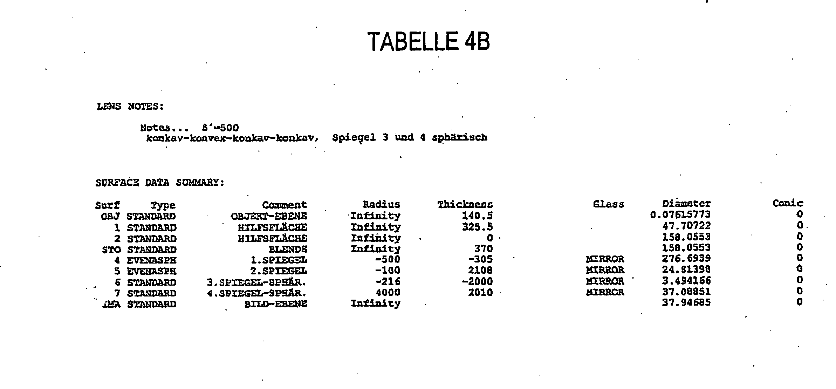

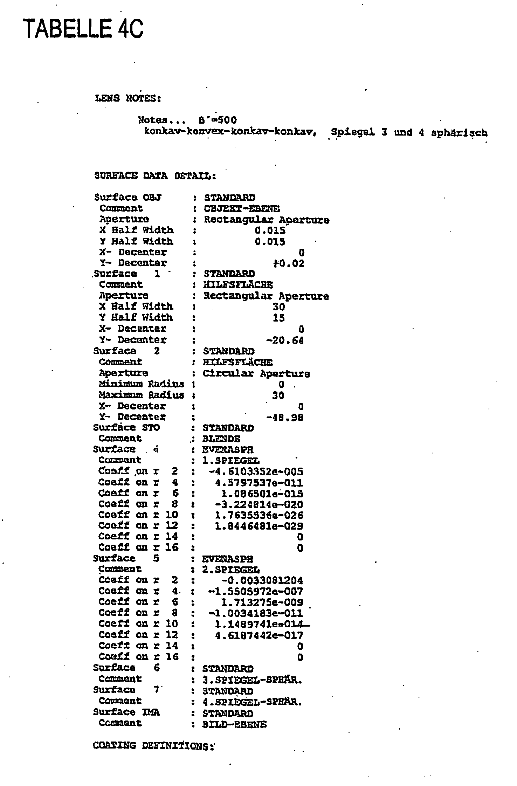

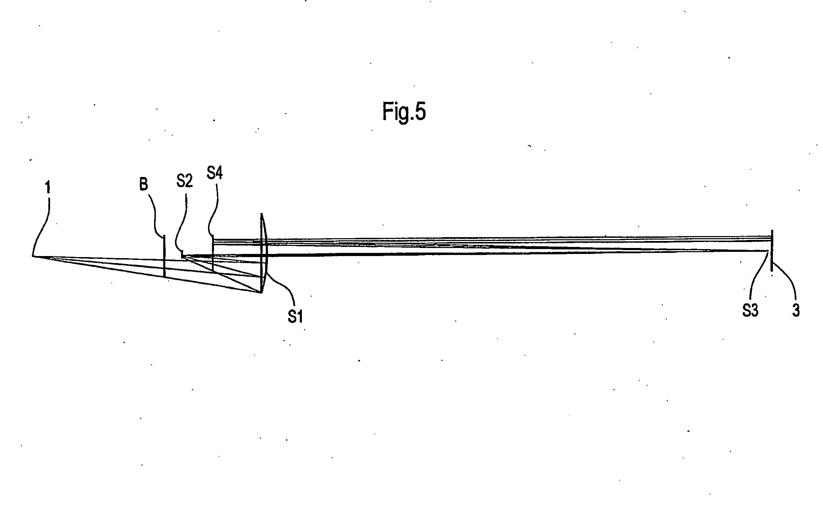

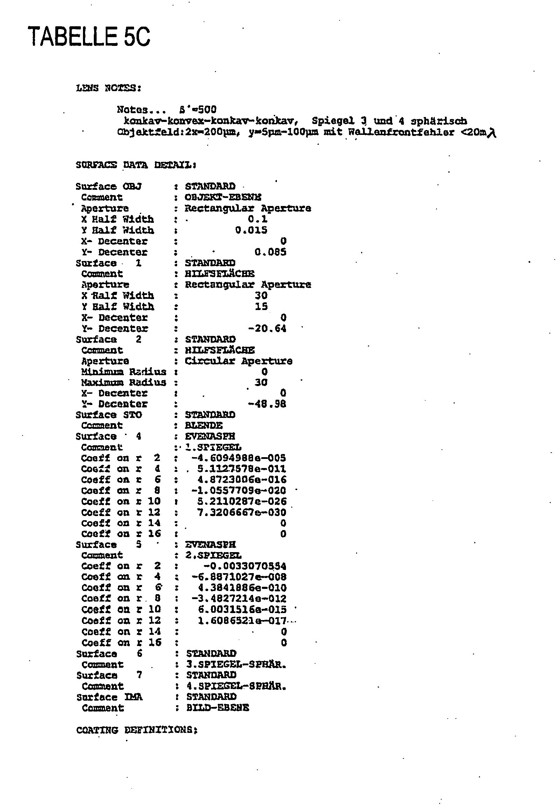

Die Figuren 4 und 5 beschreiben wiederum 4-Spiegelsysteme mit einem ersten Subsystem, umfassend Spiegel S1, S2 sowie einem zweiten Subsystem, umfassend Spiegel S3 und S4. Gleiche Bauteile wie in den vorangegangenen Figuren 2 und 3 sind wiederum mit denselben Bezugsziffern belegt. Der grundsätzliche Aufbau der Systeme gemäß Figur 4 und 5 ist koaxial. Besonders vorteilhaft ist, daß der dritte Spiegel S3 und der vierte Spiegel S4 sphärisch ausgebildet sind und nur der erste Spiegel S1 und der zweite Spiegel S2 rotationssymmetrische asphärische Spiegelsegmentflächen umfassen. Der erste Spiegel S1 ist ein Konkavspiegel mit Krümmungsradius I $R_1$ | = 500 mm, der zweite Spiegel ein Konvexspiegel mit Krümmungsradius | $R_2$ | = 100 mm, der dritte Spiegel ein Konkavspiegel mit Krümmungsradius | $R_3$ | =216 mm und der vierte Spiegel ein Konkavspiegel mit Krümmungsradius | $R_4$ | = 4000 mm. Die Baulänge des optischen Systems, das heißt der Abstand von der Blendenebene, in der die Blende B angeordnet ist bis zur Bildebene 3 beträgt 2183 mm, der Abstand zwischen Objektebene 1 und Blendenebene 466 mm.

Der Abbildungsmaßstab beträgt $\beta$ = 500, das heißt das Objekt im Objektfeld und das Bild im Bildfeld liegen dezentriert zur optischen Achse HA auf der gleichen Seite. Das Objektfeld der in Figur 4 gezeigten Ausführungsform weist eine Ausdehnung von 30 $\mu$m x bei 30 $\mu$m auf und ist leicht dezentriert, das heißt außeraxial zur optischen Achse HA angeordnet. Die allgemeinen optischen Daten für das Ausführungsbeispiel gemäß Figur 4 sind in Tabelle 4a, die Zusammenfassung der Daten der optischen Flächendaten in Tabelle 4b und die speziellen Flächendaten der optischen Fläche in Tabelle 4c im Anhang angegeben.

In Figur 5 ist eine Variante des Ausführungsbeispiels gemäß Figur 4 dargestellt. Im wesentlichen wurden alle Systemdaten beibehalten, lediglich die asphärischen Flächen der Spiegel S1 und S2 geändert. Durch diese Änderung ist es möglich, das Objektfeld auf eine Größe von 200 $\mu$m x 30 $\mu$m auszudehnen, ohne daß der Wellenfrontfehler und die Verzeichnung gegenüber dem Ausführungsbeispiel in Figur 4 sich verschlechtert.

Da lediglich die Asphären auf dem ersten und zweiten Spiegel geändert wurden, können die allgemeinen optischen Daten gemäß Tabelle 4a und die allgemeinen Flächendaten gemäß Tabelle 4b auch für Ausführungsbeispiel 5 übernommen werden. Lediglich in den speziellen Asphärendaten der Spiegel S1 und S2 ergibt sich eine Abweichung. Die speziellen optischen Flächendaten gemäß Ausführungsbeispiel 5 sind in Tabelle 5c im Anhang wiedergegeben.

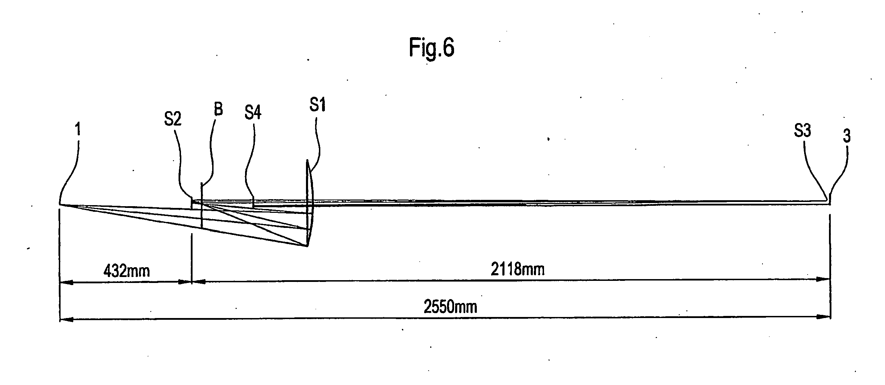

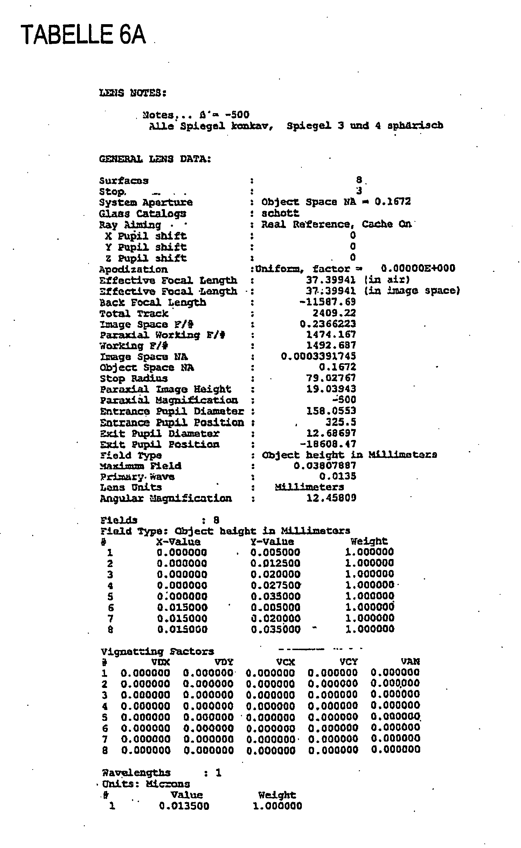

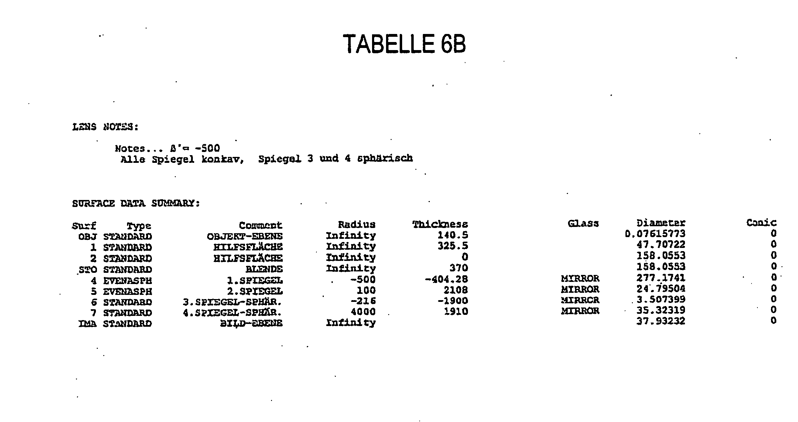

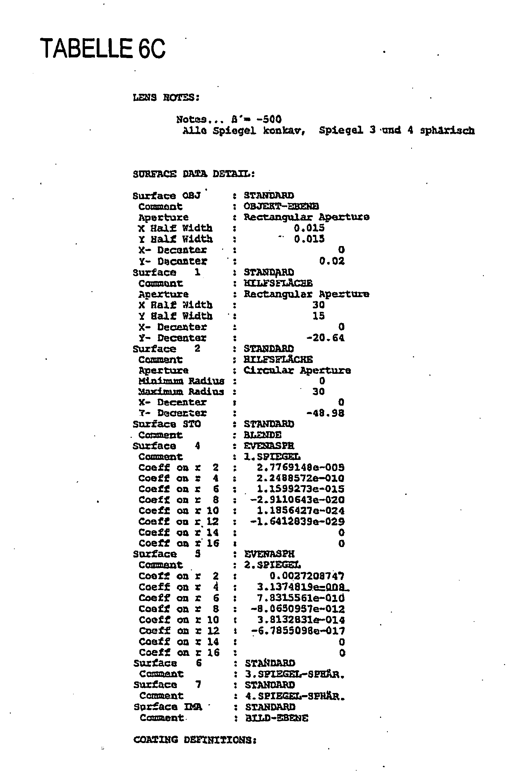

In Figur 6 ist eine weitere Variante einer 4-Spiegelanordnung mit einem ersten Spiegel S1, einem zweiten Spiegel S2, einem dritten Spiegel S3 und einem vierten Spiegel S4 angegeben. Gleiche Bauteile wie in den Figuren 2 bis 5 sind mit denselben Bezugsziffern belegt. Der wesentliche Unterschied des Ausführungsbeispiels gemäß Figur 6 gegenüber dem Ausführungsbeispiel 3, 4 und 5 ist darin zu sehen, daß der zweite Spiegel S2 ein Konkavspiegel ist und oberhalb der optischen Achse HA benutzt wird. Die Bündel nach diesem Spiegel verlaufen demzufolge ebenfalls oberhalb der optischen Achse. Der Abbildungsmaßstab beträgt $\beta$ = -500, das heißt das Objekt in der Objektebene und das Bild in der Bildebene befinden sich auf gegenüberliegenden Seiten der optischen Achse HA.

Die allgemeinen optischen Daten können Tabelle 6a, die allgemeinen Flächendaten Tabelle 6b und die speziellen Flächendaten der Ausführungsform gemäß Figur 6 Tabelle 6c im Anhang entnommen werden.

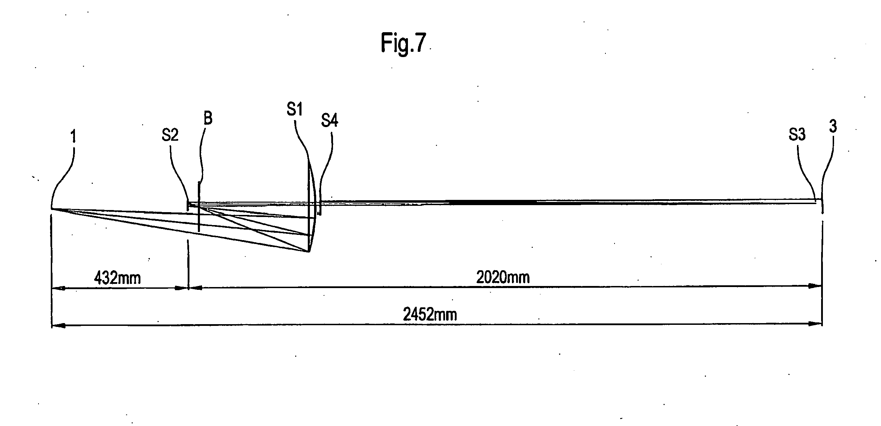

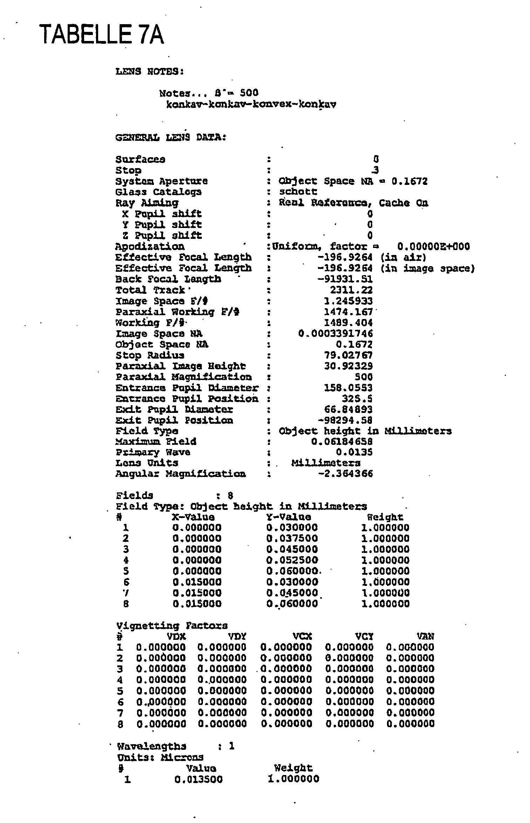

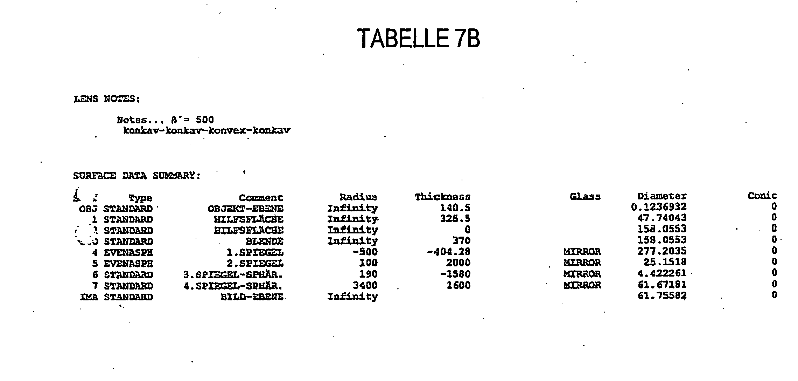

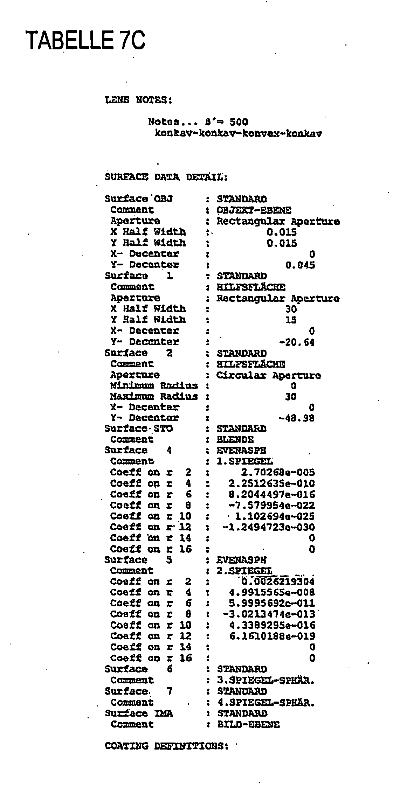

Das in Figur 7 gezeigte Ausführungsbeispiel entspricht bis auf den zweiten Spiegel S2 dem Ausführungsbeispiel gemäß Figur 6. Der wesentliche Unterschied zum Ausführungsbeispiel gemäß Figur 6 besteht darin, daß der dritte Spiegel S3 ein Konvexspiegel ist. Der Abbildungsmaßstab des Systems gemäß Figur 7 beträgt $\beta$ = 500, das heißt im Gegensatz zum Ausführungsbeispiel gemäß Figur 6 befindet sich das Objekt in der Objektebene und das Bild in der Bildebene auf der gleichen Seite in Bezug auf die optische Achse HA.

Die optischen Daten des Ausführungsbeispiels gemäß Figur 6 können Tabelle 7a, die allgemeinen Flächendaten Tabelle 7b und die speziellen Flächendaten Tabelle 7c im Anhang entnommen werden.

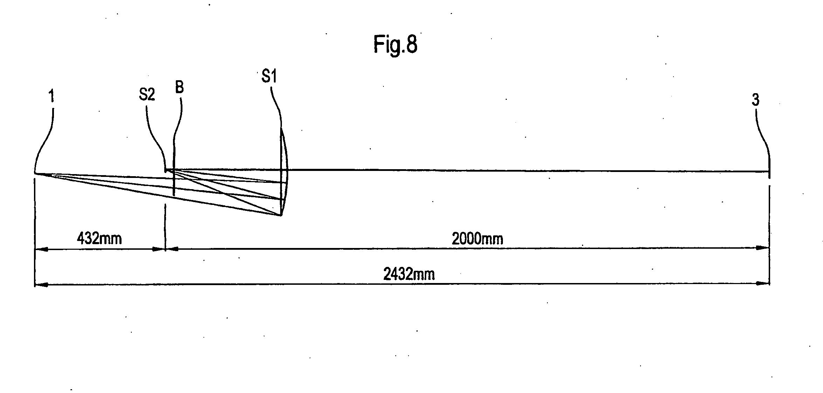

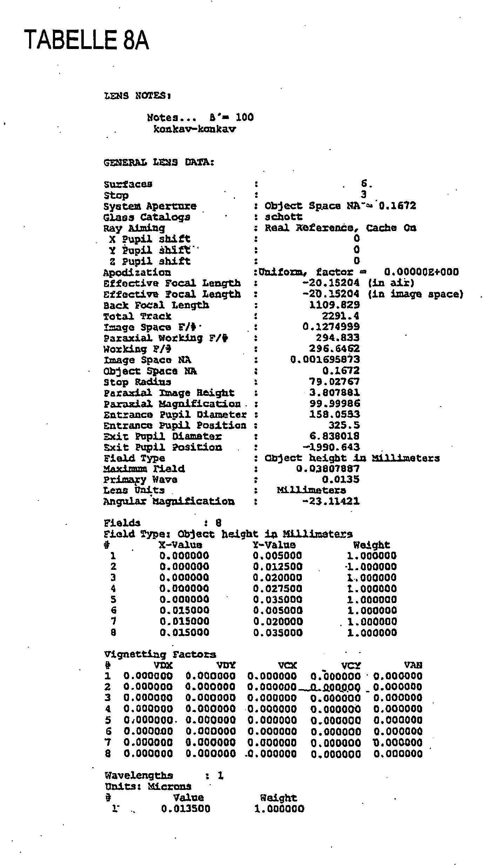

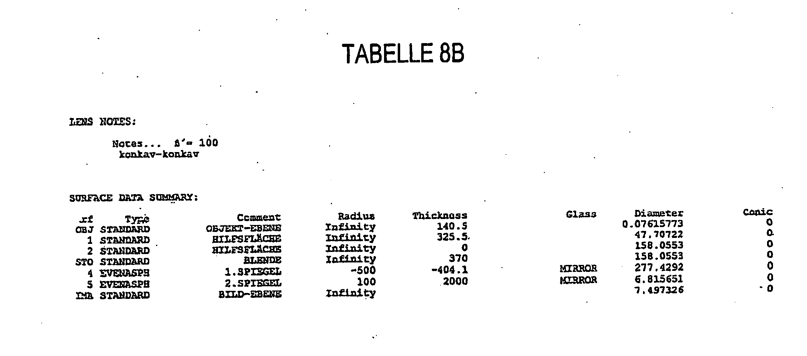

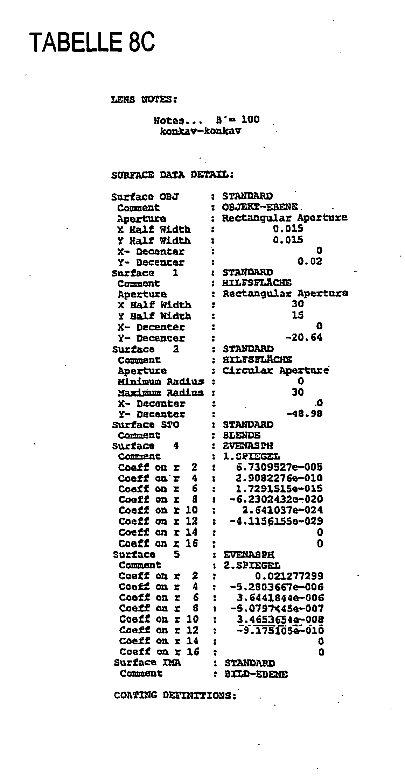

Das Ausführungsbeispiel gemäß Figur 8 zeigt, daß bei Einhaltung einer Baulänge von unter 3 m mit 2-Spiegelanordnungen Abbildungsmaßstäbe unter sinnvollen Randbedingungen nur von maximal $\beta$ = 100 für das Gesamtsystem zu realisieren sind. Bei dem in Figur 8 gezeigten System handelt es sich um ein 2-Spiegelsystem mit einem ersten Spiegel S1 und einem zweiten Spiegel S2, wobei der erste und der zweite Spiegel S1, S2 jeweils Konkavspiegel sind. Die allgemeinen optischen Daten des Ausführungsbeispiels gemäß Figur 8 sind in Tabelle 8a, die allgemeinen Flächendaten in Tabelle 8b und die speziellen Flächendaten in Tabelle 8c im Anhang wiedergegeben.

Die objektseitige Apertur der Systeme gemäß Figuren 1 bis 8 ist über die Aperturblende B einstellbar und beträgt beispielsweise zur Simulation gebräuchlicher Projektionsbelichtungsanlagen 0,0625. Die Aperturblende ist in einem Bereich 0,001 ≤ NA ≤ 0,25 einstellbar. Die Objektfeldgröße, die in der Ebene 1 durch ein nicht dargestelltes Beleuchtungssystem beleuchtet wird, beträgt beispielsweise 30 μm x 30 μm bzw. 100 x 100 μm. Wird beispielsweise eine Maske, ein sogenanntes Retikel, für die Mikrolithographie untersucht, so haben derartige Masken typischerweise Abmessungen von 152 x 152 mm. Mit dem erfindungsgemäßen reflektiven Röntgenmikroskop ist somit nur die Abbildung eines Ausschnittes der Maske möglich. Das Objekt in der Objektebene 1 wird mit Systemen gemäß Figuren 1 bis 7 300 -10000-fach vergrößert in die Bildebene 3 abgebildet. Da die Aperturblendenebene B zugänglich ist, kann in der Blendenebene die Apertur mittels der Aperturblende B in einem Bereich 0,001 ≤ NA ≤ 0,25 eingestellt werden. NA bezeichnet hier die abbildungsseitige, nachfolgend auch als Apertur NA $_{Abbildung}$ bezeichnet, Apertur am Objekt. Der Winkel α des Hauptstrahls 5 in der Objektebene 1 beträgt zur optischen Achse des Systems in der Regel 6°. Mit Hilfe der Röntgenmikroskopie gemäß den Figuren 1 bis 7, die mehr als zwei Spiegel umfassen, ist es möglich, ein ausreichend vergrößerndes Röntgenmikroskopobjektiv zu erhalten, dessen Baulänge geringer 3000 mm ist.

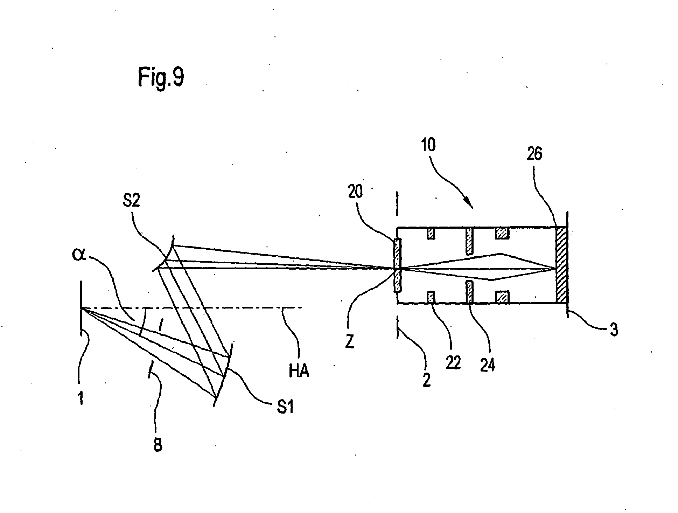

In Figur 9 ist eine weitere Ausführungsform der Erfindung gezeigt mit einem ersten Subsystem und einem zweiten Subsystem. Vorliegend umfaßt das erste Subsystem einen ersten Spiegel S1 und einen zweiten Spiegel S2. Der erste Spiegel S1 ist ein Konkavspiegel und der zweite Spiegel S2 ein Konvexspiegel. Die Spiegel S1 und S2 sind zentriert zur optischen Achse HA angeordnet. Denkbar wären auch Systeme mit nur einem einzigen Spiegel. Das zweite Subsystem umfaßt ein Photoemissions-Elektronenmikroskop 10. Das dezentriert zur optischen Achse HA angeordnete Objekt in der Objektebene 1 wird durch das erste Subsystem in ein Zwischenbild Z in einer Zwischenbildebene 2 abgebildet. Die einstellbare Aperturblende B ist dezentriert zur optischen Achse zwischen Objektebene und erstem Spiegel im hoch-aperturigen Teil des Abbildungssystems angeordnet. Durch die Anordnung im hochaperturigen Teil können unterschiedliche numerische Aperturen sehr genau eingestellt werden. Die Photokathode 20 des Photoemissions-Elektronenmikroskops ist nahe der Zwischenbildebene 2 angeordnet. Mit dem Photoemissions-Elektronenmikroskop (PEEM) wird das Zwischenbild Z in der Zwischenbildebene 2 in ein vergrößertes Bild in der Bildebene 3 abgebildet. Vom Photoemissions-Elektronenmikroskop 10 sind nur schematisch einige wichtige Bauteile gezeigt. Das auf eine Photokathode 20 auftreffende Röntgenlicht löst Elektronen aufgrund des Photoeffekts aus. Die ausgelösten Elektronen werden über Linsen 22, wovon beispielhaft nur eine dargestellt ist, und Blenden 24, wovon beispielhaft ebenfalls nur eine dargestellt ist, auf einen Fluoreszenzschirm 26 abgebildet. Durch den Floureszenzbildschirm wird das von den Elektronen erzeugte Bild in ein visuelles Bild umgesetzt, das mit einer Beobachtungseinrichtung, beispielsweise einer CCD-Kamera, beobachtet werden kann.

Die objektseitige Apertur des Systems gemäß Figur 9 ist über die Aperturblende B einstellbar und beträgt beispielsweise zur Simulation gebräuchlicher Projektionsbelichtungsanlagen 0,0725. Die Aperturblende ist in einem Bereich 0,001 ≤ NA ≤ 0,25 einstellbar. Die Objektfeldgröße, die in der Ebene 1 durch ein nicht dargestelltes Beleuchtungssystem beleuchtet wird, beträgt beispielsweise 30 μm x 30 μm bzw. 100 x 100 μm. Wird beispielsweise eine Maske, ein sogenanntes Retikel, für die Mikrolithographie untersucht, so haben derartige Masken typischerweise Abmessungen von 152 x 152 mm. Mit dem erfindungsgemäßen reftektiven Röntgenmikroskop ist somit nur die Abbildung eines Ausschnittes der Maske möglich. Das Objekt in der Objektebene 1 wird 300 -10000 x-fach vergrößernd in die Bildebene 3 abgebildet. Da die Aperturblendenebene B, wie insbesondere Figur 9 zeigt, zugänglich ist, kann in der Blendenebene die Apertur mittels der Aperturblende B in einem Bereich 0,001 ≤ NA ≤ 0,25 eingestellt werden. NA bezeichnet hier die abbildungsseitige, nachfolgend auch als Apertur NA $_{Abbildung}$ bezeichnet, Apertur am Objekt. Der Winkel α des Hauptstrahls 5 in der Objektebene 1 beträgt zur optischen Achse des Systems 6°. Mit Hilfe des Photoemissions-Elektronenmikroskop ist es möglich, ein ausreichend vergrößerndes Röntgenmikroskopobjektiv zu erhalten, dessen Baulänge geringer 2000 mm ist.

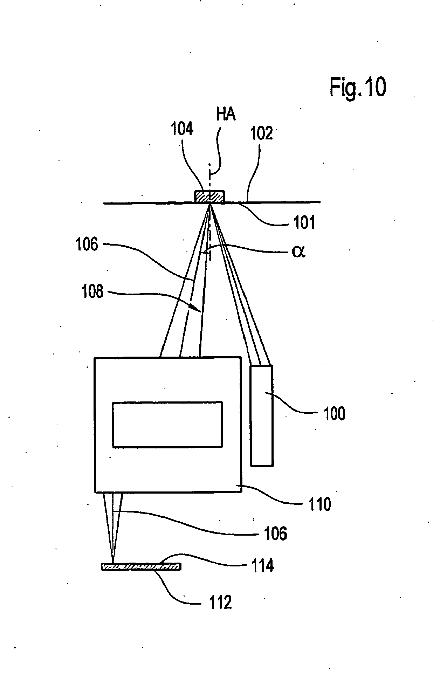

In Figur 10 ist ein Inspektionssystem, insbesondere zur Untersuchung beschichteter EUV-Masken mit kleinem Objektfeld dargestellt. Ein Beleuchtungssystem 100 leuchtet in einer Objektebene 101 ein Feld 102 in einer vorbestimmten Art und Weise aus. Das Beleuchtungssystem 100 kann eine nicht dargestellte Beleuchtungsaperturblende umfassen zur Einstellung des Pupillenfüllungsgrades σ. Der Pupillenfüllungsgrad σ ist definiert als

$$\sigma = \frac{\sin\alpha}{\sin\beta} \approx \frac{NA_{Beleuchtung}}{NA_{Abbildung}},$$

wobei NA $_{Beleuchtung}$ die numerische Apertur im Beleuchtungssystem, die durch die Beleuchtungsaperturblende vorgegeben wird, und NA $_{Abbildung}$ die numerische Apertur des Abbildungssystems, die durch die Aperturblende B des Abbildungssystems, hier des reflektiven Röntgenmikroskops, vorgegeben wird, darstellt.

Um verschiedene Beleuchtungs-Settings einstellen zu können, beispielsweise eine kreisförmige, eine annulare, eine quadrupolare oder eine bipolare Beleuchtung, kann in einer Aperturblendenebene ein Blendenrad angeordnet sein.

Mit Hilfe der variabel einstellbaren Beleuchtungsaperturblende, der Aperturblende im Abbildungssystem bzw. dem Blendenrad ist es möglich, mit dem erfindungsgemäßen Inspektionssystem die Einstellungen in einer EUV-Projektionsbelichtungsanlage, in der die Maske bzw. das Retikel eingesetzt wird, zu simulieren und durch Auswertung der Maskenbilder die optimalen Einstellungsparameter der Projektionsbelichtungsanlage in bezug auf Apertur, Art der Beleuchtung, etc. zu ermitteln. Damit ist das Inspektionssystem für weit mehr als nur die Untersuchung von Masken auf Defekte hin geeignet. Wird eine Maske auf Defekte hin untersucht, so sind die defekten Stellen der zu untersuchenden EUV-Maske 104 innerhalb des ausgeleuchteten beobachteten Feldes angeordnet. Für die Feldmitte des Feldes 102 ist in Figur 10 der Strahlverlauf eines Strahlbüschels gezeigt. Der Hauptstrahl 106 des von der Feldebene ausgehenden Strahlbüschels 108 ist um einen Winkel $\alpha$ gegenüber der optischen Achse HA geneigt. Der Winkel $\alpha$ entspricht dem Hauptstrahleinfallswinkel in Projektionsbelichtungsanlagen am Objekt, der bevorzugt 6° beträgt.

Mit Hilfe eines erfindungsgemäßen Röntgenmikroskopes als Abbildungssystem 110, das in Figur 10 nicht näher dargestellt ist, aber ein Röntgenmikroskopobjektiv gemäß Figur 1 bis 9 umfassen kann, wird das Objekt 104 in der Objektebene 101 in ein Bild in der Bildebene 112 abgebildet. Wie aus Figur 10 hervorgeht, ist der Strahlverlauf eines von der Feldmitte ausgehenden Strahlbüschels in der Bildebene 112 telezentrisch, d. h. der Hauptstrahl 106 eines Strahlbüschels 108 trifft senkrecht auf die Bildebene 112. Möglich wäre auch die bewusste Einführung von Abbildunsfehlern durch Verschieben mindestens einer der Aperturblenden aus der durch Telezentrie gekennzeichneten idealen Position in eine nicht - ideale Position, was zur Folge hat, daß das Strahlbüschel nicht telezentrisch auf die Bildebene 112 auftrifft. Das Bild 114 des Objektes 104 in der Bildebene 112 ist vergrößert. Die Vergrößerung liegt bevorzugt im Bereich 300 x bis 1000 x. In der Bildebene 112 ist zur Beobachtung eine Beobachtungsvorrichtung angeordnet. Die Beobachtungsvorrichtung kann eine Kamera, insbesondere eine CCD-Kamera, eine Multikanalplatte oder ein Floureszenzschirm sein.

Die Beobachtungsvorrichtung wiederum kann mit einer ebenfalls in Figur 10 nicht dargestellten Analyseeinheit ausgeführt sein, der das von der Beobachtungsvorrichtung aufgenommene Bild beispielsweise in digitaler Form zur Auswertung zugeführt wird. Die Analyseeinheit kann ein programmierbarer, digitaler Computer sein.

Der programmierbare digitale Computer wiederum kann Steuereinrichtungen umfassen, die die Aperturblende in der Abbildungsoptik, die Beleuchtungsaperturblende bzw. das Blendenrad sowie die Feldblenden in dem Inspektionssystem ansteuert, um die Größe und Form des ausgeleuchteten Objektfeldes in der Objektebene, die Pupillenfüllung und die numerische Apertur einzustellen. Des weiteren kann das System Einrichtungen zur Positionierung des zu untersuchenden Objektes in der Objektebene, die auch als x-y-Ebene bezeichnet wird, umfassen. Dadurch ist es möglich, unterschiedliche Ausschnitte der Maske mit einem geringen Objektfeld, beispielsweise von 30 $\mu$m x 30 $\mu$m oder 100 $\mu$m x 100 $\mu$m, bei einer Maskengröße von z.B. 152 x 152 mm$^2$ zu untersuchen. Durch systematisches Abfahren der Maske in der x-y-Ebene kann bei durch die einstellbaren Blenden simulierter Projektionsbelichtungsanlage die gesamte Maske untersucht werden. Da dies jedoch sehr aufwendig ist, ist mit Vorteil vorgesehen, das Abbildungssystem so auszugestalten, daß das erste Subsystem leicht vom zweiten Subsystem getrennt werden kann. Wird ein größeres oder kleineres Objektfeld oder eine größere oder kleinere Vergrößerung benötigt, kann das zweite Subsystem gegen ein zweites Subsystem mit größerer oder niedrigerer Vergrößerung und/oder größerem oder kleinerem Objektfeld sehr leicht getauscht werden. In einem solchen Fall kann die gesamte Maske grob untersucht und die auf der Maske kritischen Bereiche mit Hilfe der x-y-Positioniereinrichtung angefahren und diese Bereiche dann mit einer anderen Optik auf Defekte hin untersucht werden. Neben der Verfahrbarkeit in der x-y-Ebene mit der Positioniereinrichtung sind in einer bevorzugten Ausführungsform der Erfindung auch Fokuseinstellvorrichtungen vorgesehen, mit denen das Objekt senkrecht zur Objektebene verfahren und Bilder an vorbestimmten Fokuspositionen ober- und unterhalb des Fokus aufgenommen werden können. Auf diese Art und Weise ist es möglich, Bilder der Maske bei unterschiedlichen vorgegebenen Fokusebenen aufzunehmen. Die Anzahl dieser Fokusebenen hängt von der gewünschten Genauigkeit der Untersuchung ab.

Zusätzlich zu den Bilddaten bei unterschiedlichen Fokusebenen können auch Daten über die Beleuchtungsintensität in der Beleuchtungsebene für jedes einzelne Bild aufgenommen werden.

Aus den aufgenommenen Bilddaten können in Abhängigkeit von der x-, y-Position sowie der z-Position Intensitätsdatenkarten der untersuchten Maske generiert werden. Diese Intensitätsdatenkarten können mit Intensitätsdatenkarten, die aufgrund von Simulationsrechnungen erhalten wurden, oder Referenzdatenkarten, die bei der Untersuchung von Masken bzw. Objekten, die in einem Projektionsbelichtungsprozeß zu akzeptablen Ergebnissen geführt haben, verglichen werden. Auf diese Art und Weise ist eine Untersuchung der Maske auf Defekte und eventuell deren Reparatur hin möglich, sowie eine Qualifizierung der Maske.

Das Inspektionssystem ist nicht nur für die Defektanalyse und die Reparatur von Masken für die Mikrolithographie geeignet, sondern auch zur lokalen Reinigung der Masken durch Bestrahlung mit Licht der Wellenlänge des Inspektionssystems oder Optimierung des Designs der Maskenstruktur und zur Prozeßoptimierung für den Belichtungsprozeß und die Systemkonfiguration in Projektionsbelichtungsanlagen.

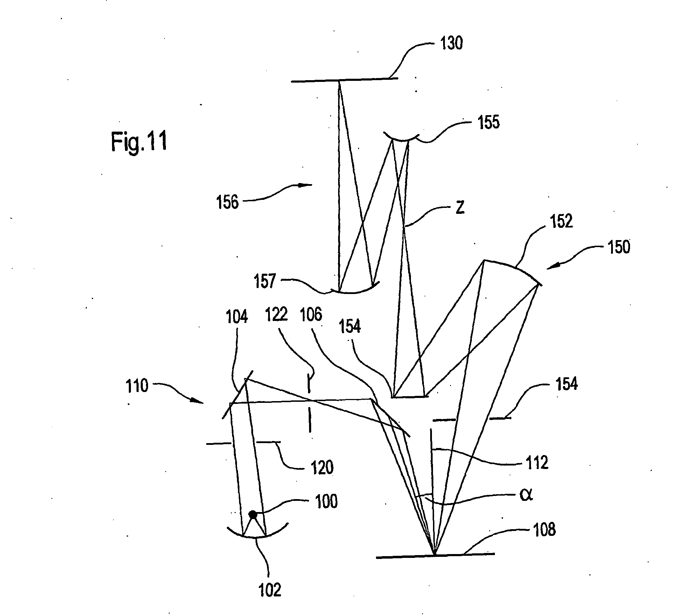

In Figur 11 ist eine Prinzipskizze des gesamten Inspektionssystems gezeigt. Das Licht einer EUV-Lichtquelle 100 wird von einem Kollektor 102 gesammelt und über Spiegel 104, 106 des Beleuchtungssystems auf die Objektebene 108, in der sich das zu untersuchende Objekt befindet, gelenkt. Das Strahlbüschel des Beleuchtungssystems 110 fällt nicht telezentrisch auf das Objekt in der Objektebene 108, sondern unter einem Winkel. Bevorzugt ist der Hauptstrahlwinkel des Strahlbüschels identisch dem Hauptstrahlwinkel unter dem auch die Projektionsbelichtungsanlage betrieben wird. Bevorzugt beträgt dieser Winkel $\alpha$ relativ zur Normalen 112 in einem ersten Ausführungsbeispiel 6°.

Im Beleuchtungssystem 110 sind im Strahlengang vom Kollektor 102 zur Objektebene 108 eine Beleuchtungsaperturblende 120 und eine Feldblende 122 angeordnet. Das Objekt in der Objektebene 108, das unter Reflexion beleuchtet wird, wird mit einem erfindungsgemäßen Abbildungssystem in eine Bildebene 130 abgebildet, in der das Objekt beobachtet werden kann. Die Abbildung erfolgt in dieser Ausführungsform zweistufig und zwar mit einem Zwischenbild Z. Das erste Subsystem 150 des Abbildungssystems umfaßt einen ersten Spiegel 152 und einen zweiten Spiegel 154. Das vom ersten Subsystem in die Zwischenbildebene abgebildete Zwischenbild des Objektes in der Objektebene, bevorzugt die zu untersuchende Maske, wird mittels eines zweiten Subsystems 156 vergrößert in die Bildebene 130 abgebildet. Die Aperturblende 154 im Abbildungssystem befindet sich im Strahlengang von der Objektebene zur Zwischenbildebene zwischen Objektebene 108 und erstem Spiegel 152 des ersten Subsystems 150. Das zweite Subsystem kann beispielsweise ein optisches System umfassend, mindestens einen Spiegel, ein PEEM sein. Das wurde zuvor detailliert beschrieben.

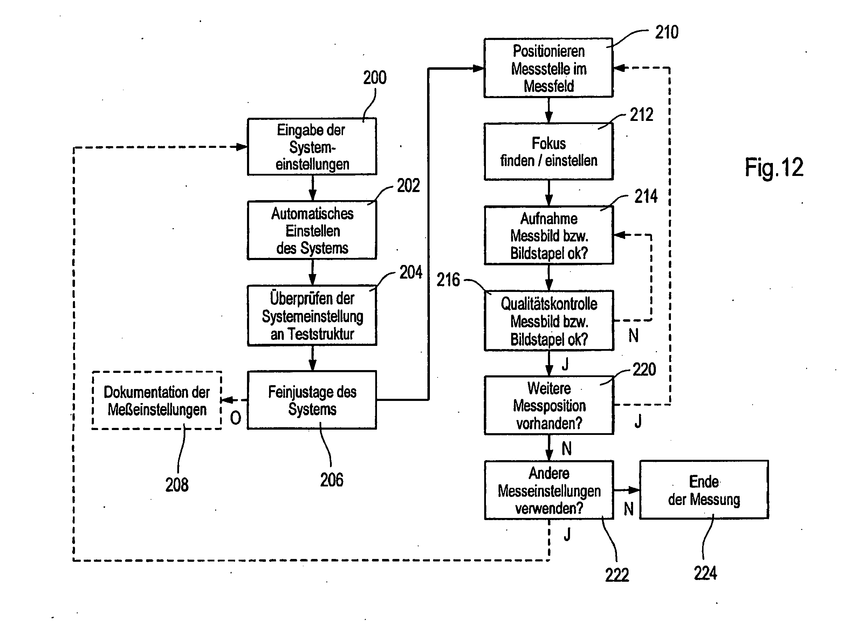

In Figur 12 ist ein beispielhafter Meßablauf zur Untersuchung eines Objektes mit Hilfe des erfindungsgemäßen Inspektionssystems gezeigt. In einem ersten Schritt 200 erfolgt eine Eingabe der Systemeinstellung, beispielsweise der Apertur $NA_{Abbildung}$, der Apertur $NA_{Beleuchtung}$ sowie der Obskurations- bzw. der Feldblende. Die Blenden werden daraufhin in einem zweiten Schritt 202 eingestellt. Sodann werden die Systemeinstellungen in einem Schritt 204 anhand einer Teststruktur, beispielsweise einer Linearstruktur in x- bzw. y-Richtung überprüft. Mit Hilfe der Teststruktur wird das System in einem Schritt 206 feinjustiert. Sodann wird in einem Schritt 210 die Meßstelle im Meßfeld, das ist der zu untersuchende Bereich des Objektes, positioniert, in dem beispielsweise der x-y-Tisch an die entsprechende Stelle verfahren wird. Optional kann vor Positionieren im Meßfeld auch eine Dokumentation der Meßeinstellungen in einem Schritt 208 vorgenommen werden.

Nachdem die zu untersuchende Meßstelle positioniert wurde, wird in einem letzten Schritt 212 der Fokus eingestellt. Ist der Fokus im Schritt 212 aufgefunden, so wird entweder ein Meßbild im Schritt 214 aufgenommen oder der Fokus wie zuvor beschrieben durchfahren, d.h. Meßbilder für unterschiedliche z-Positionen aufgenommen. Nach jedem Meßbild findet in Schritt 216 eine Qualitätskontrolle desselben statt bzw. werden die unterschiedlichen Fokuspositionen zugeordneten Meßbilder in qualitativer Hinsicht beurteilt. Genügen diese den Qualitätsanforderungen, so wird, falls vorhanden, das Objekt an eine weitere Meßstelle verfahren und dort wiederum die Meßreihe wie zuvor beschrieben aufgenommen. Führt die Qualitätskontrolle zu einem negativen Ergebnis, so wird an derselben Stelle ein neues Meßbild aufgenommen bzw. eine Vielzahl von Meßbildern, die unterschiedlichen z-Positionen zugeordnet sind.

Ist keine weitere Meßposition 220 mehr vorhanden, so können entweder in Schritt 222 die Systemeinstellungen geändert oder die Messung in Schritt 224 beendet werden.

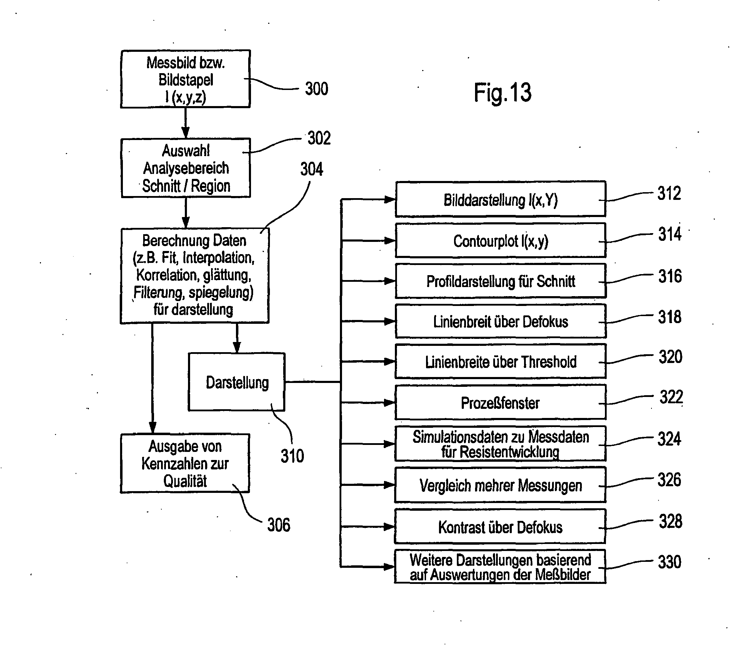

In Figur 13 sind mögliche Auswertungen von mit Hilfe des Inspektionssystems gewonnenen Messbildern bzw. Meßinformationen, die beispielsweise mit Hilfe einer Computereinrichtung durchgeführt werden können, dargestellt. Das ausgewählte Messbild 300, das eine Funktion des Ortes auf dem zu untersuchenden Objekt in der Objektebene, d.h. in der x-y-Ebene, ist, sowie in z-Richtung, wenn verschiedene Meßbilder ober- und unterhalb der Fokusebene aufgenommen wurden, kann in einem Schritt 302 sowohl was den Ort auf der Probe, also die x-y-Position angeht, d.h. in bezug auf die Region, wie auch in bezug auf die z-Position, d.h. in bezug auf den Schnitt ausgewählt und anschließend analysiert werden. Die ausgewählten Daten können numerisch bearbeitet und bestimmte Darstellungen berechnet werden, wie in Schritt 304 angegeben. Beispielsweise können die Daten gefittet, interpoliert, korreliert, geglättet, gefiltert oder gespiegelt werden. Die Aufbereitung der Daten durch Berechnung bzw. Aufbereitung in Schritt 304, kann auch z.B. automatisiert anhand von Kennzahlen in bezug auf die Qualität in Schritt 306 charakterisiert werden.

Alternativ zur Ausgabe von Kennzahlen zur Qualität oder zusätzlich hierzu können in Schritt 310 verschiedene Darstellungen vorgenommen werden. So ist eine Bilddarstellung der Intensität in x-, y-Richtung möglich oder ein Konturplot. Dies ist mit Bezugsziffer 312 und 314 gekennzeichnet. Alternativ hierzu können die Profile für die Schnitte gezeigt werden oder die Linienbreite über der Defokussierung, d.h. der Bewegung in z-Richtung. Dies ist mit 316 und 318 gekennzeichnet. Des weiteren kann die Linienbreite über den Threshold dargestellt werden. Dies ist mit Bezugsziffer 320 gekennzeichnet. Alternative Darstellungsarten sind das Prozeßfenster, das mit Bezugsziffer 322 gekennzeichnet ist, und eine Anzeige der Simulationsdaten zu Meßdaten für die Resistentwicklung, was mit Bezugsziffer 324 gekennzeichnet ist. Auch ist ein Vergleich mehrerer Messungen möglich oder eine Darstellung des Kontrastes über die Defokussierung, d.h. der Bewegung in z-Richtung. Dies mit den Bezugsziffern 326 und 328 gekennzeichnet. Auch andere Darstellungen basierend auf der Auswertung der Messbilder gemäß Schritt 330 sind möglich. Die möglichen Darstellungsarten sind für Inspektionssysteme, die im Wellenlängenbereich $\geq$ 193 nm arbeiten im Operating Manuel AIMS Fab B 41003E und/oder Software Manual AIMS Fab B40409E der,Carl Zeiss Microelectronic Systems GmbH eingehend beschrieben. Der Offenbarungsgehalt dieser Schriften wird vollumfänglich in die vorliegende Anmeldung mitaufgenommen.

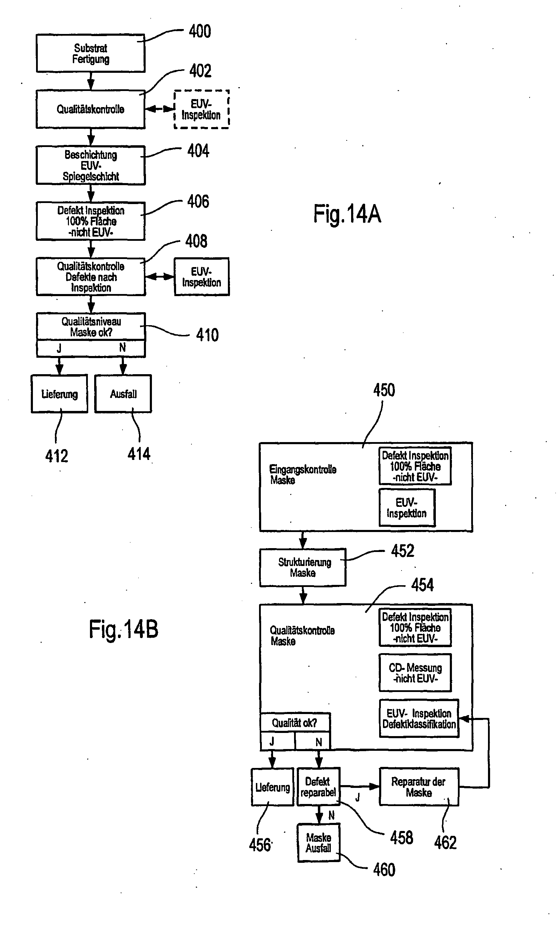

In den Figuren 14a bis 14c sind mögliche Einsatzgebiete des Inspektionssystems gezeigt. So zeigt Figur 14a den Einsatz des EUV-Inspektionssystems beispielsweise bei der Herstellung von Maskenblanks, d.h. Maskenrohlingen. Das gemäß Schritt 400 gefertigte Substrat, das in der Regel ein Glassubstrat ist, kann in Schritt 402 mit Hilfe des erfindungsgemäßen EUV-Inspektionssystems in bezug auf seine Qualität kontrolliert werden. Ist diese Qualität ausreichend, so wird das Substrat im Schritt 404 mit EUV-Spiegelschichten beschichtet. Diese Spiegelschichten werden nunmehr in Schritt 406 auf Defekte hin inspiziert, und zwar die gesamte Fläche. Die Defektinspektion gemäß Schritt 406 erfolgt mit einem Inspektionsmodul, beispielsweise einem zum EUV-Abbildungssystem parallelen Abbildungssystem, das mit sichtbarem Licht arbeitet. Ergeben sich Defekte auf der Maske, so können gemäß Schritt 408 diese Defekte mit Hilfe des EUV-Inspektionssystems näher untersucht werden. Hierzu wird die zuvor auf der gesamten Fläche untersuchte Maske mit einer x-y-Postioniereinrichtung an die Defektstellen verfahren und gezielt diese Bereiche der Maske mit dem EUV-Inspektionssystem untersucht. Ist die Qualität der Maske gemäß Schritt 410 nach erfolgter EUV-Inspektion ausreichend, so kann die Maske gemäß Schritt 412 ausgeliefert werden oder wird gemäß Schritt 414 verworfen.

Figur 14b zeigt als weiteres Einsatzgebiet des EUV-Inspektionssystems die Verwendung in der Maskenproduktion. Das eingehende beschichtete Maskensubstrat kann gemäß Figur 14b in Schritt 450 mit Hilfe des EUV-Inspektionssystems in der Eingangskontrolle untersucht werden. Ist die Maske qualitativ ausreichend, so kann diese in einem nachfolgenden Schritt 452 strukturiert werden. Die gesamte strukturierte Maske gemäß Schritt 452 kann in Schritt 454 wiederum qualitativ mit Hilfe des EUV-Inspektionssystems untersucht werden. Hierzu erfolgt wie bei der Eingangskontrolle 450 zunächst eine Defektinspektion der gesamten Maskenfläche mit einem Inspektionssystem, das beispielsweise mit sichtbarem Licht arbeitet sowie eine CD-Messung, ebenfalls mit einem System, das im sichtbaren bzw. UV oder VUV-Wellenlängenbereich arbeitet. Ergeben sich bei der Defektinspektion oder bei der CD-Messung, die nicht mit EUV-Strahlung durchgeführt wird, Defekte, so kann das EUV-Inspektionssystem dazu eingesetzt werden, die dort aufgefundenen Defekte näher zu klassifizieren. Wird aufgrund der EUV-Inspektion der Defekte die Qualität der Masken nach Defektinspektion für ausreichend befunden, so kann diese gemäß Schritt 456 ausgeliefert werden. Ist die Maske qualitativ nicht ausreichend, so kann die Maske an die entsprechende Defektstelle verfahren und in Schritt 458 daraufhin untersucht werden, ob eine Reparatur möglich ist oder nicht. Ist keine Reparatur möglich, so wird die Maske gemäß Schritt 460 verworfen. Ist eine Reparatur möglich, so wird diese gemäß Schritt 462 durchgeführt und erneut der EUV-Inspektion unterworfen. Ergeben sich nunmehr ausreichende Qualitätsdaten, so kann die reparierte Maske ausgeliefert werden.

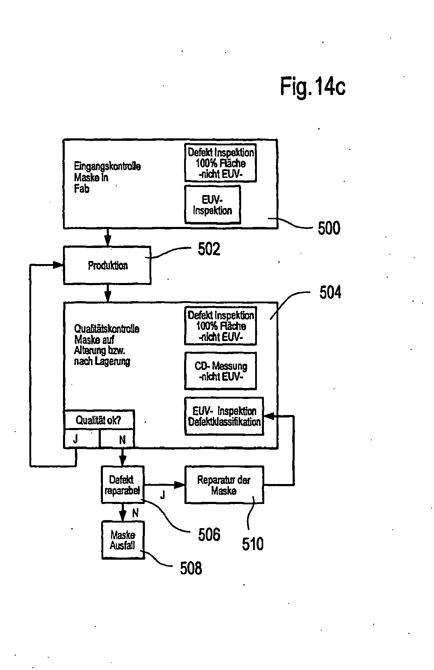

Figur 14 c zeigt als Einsatzgebiet des EUV-Inspektionssystems die Verwendung eines derartigen Inspektionssystems in der Wafer-Fabrik.

In der Wafer-Fabrik kann die Maske gemäß Schritt 500 zunächst einer Eingangskontrolle unterzogen werden. Im Laufe des Produktionsprozesses 502 altert die Maske. Die Masken können in regelmäßigen Abständen mit Hilfe des erfindungsgemäßen EUV-Inspektionssystems auf ihre Qualität nach Alterung bzw. nach Lagerung gemäß Schritt 504 untersucht werden. Hierzu wird die Maske zunächst wiederum mit Strahlung im sichtbaren oder UV oder VUV-Wellenlängenbereich vollflächig auf Defekte hin untersucht. An den Stellen, an denen Defekte auftreten, wird eine EUV-Inspektion vorgenommen. Ist die Maskenqualität noch ausreichend, so kann die Maske in der Produktion weiter verwandt werden. Ergibt die EUV-Inspektion, daß die Maske den qualitativen Anforderungen nicht mehr genügt, so kann untersucht werden, ob der Defekt reparabel ist. Dieser Schritt wird mit Schritt 506 bezeichnet. Scheidet eine Reparatur aus, so wird die Maske gemäß Schritt 508 aus dem Produktionsprozeß genommen. Ist eine Reparatur möglich, so wird die Maske gemäß Schritt 510 repariert und nach der Reparatur erneut mit Hilfe des EUV-Inspektionssystems inspiziert. Der Defekt wird nach erfolgter Reparatur klassifiziert und bei ausreichender Qualität die Maske wiederum in den Produktionsprozeß überführt und bei nicht ausreichender Qualität verworfen.

Mit der Erfindung wird somit erstmals ein Röntgenmikroskop für Objekte, die in der EUV-Lithographie Verwendung finden, angegeben, das sich durch eine sehr kurze Baulänge und eine kompakte Bauweise auszeichnet.

**Patentansprüche**

1.   Reflektives Röntgenmikroskop zur Untersuchung eines Objektes in Reflexion in einer Objektebene, wobei das Objekt mit Strahlung einer Wellenlänge < 100 nm, insbesondere < 30 nm, beleuchtet und in eine Bildebene vergrößert abgebildet wird, mit einem im Strahlengang von der Objektebene (1) zur Bildebene (3) angeordneten ersten Subsystem, umfassend einen ersten Spiegel (S1) und einen zweiten Spiegel (S2),
**dadurch gekennzeichnet, dass**
das reflektive Röntgenmikroskop ein dem ersten Subsystem im Strahlengang nachgeordnetes zweites Subsystem umfasst, das wenigstens einen dritten Spiegel (S3) aufweist.

**2.** Reflektives Röntgenmikroskop nach Anspruch 1, **dadurch gekennzeichnet, dass** der erste Spiegel (S1) ein Konkavspiegel und der zweite Spiegel (S2) ein Konvexspiegel ist.

**3.** Reflektives Röntgegenmikroskop nach Anspruch 1, **dadurch gekennzeichnet, dass** der erste Spiegel (S1) ein Konkavspiegel und der zweite Spiegel (S2) ein Konkavspiegel ist.

**4.** Reflektives Röntgenmikroskop nach einem der Ansprüche 1 bis 3, **dadurch gekennzeichnet, dass** das zweite Subsystem einen dritten (S3) und einen vierten Spiegel (S4) umfasst.

**5.** Reflektives Röntgenmikroskop gemäß Anspruch 4, **dadurch gekennzeichnet, dass** der dritte (S3) und der vierte Spiegel (S4) je Konkavspiegel sind.

**6.** Reflektives Röntgenmikroskop gemäß Anspruch 4, **dadurch gekennzeichnet, dass** der dritte Spiegel (S3) ein Konvexspiegel und der vierte Spiegel (S4) ein Konkavspiegel ist.

**7.** Reflektives Röntgenmikroskop nach einem der Ansprüche 1 bis 6, **dadurch gekennzeichnet, dass** das Röntgenmikroskop eine Vergrößerung von $\beta \geq 50$ x, bevorzugt im Bereich $100$ x $\leq \beta \leq 1000$ x aufweist.

**8.** Reflektives Röntgenmikroskop gemäß einem der Ansprüche 1 bis 7, **dadurch gekennzeichnet, dass** im Strahlengang von der Objektebene zur Bildebene ein reelles Zwischenbild in einer Zwischenbildebene ausgebildet wird.

**9.** Reflektives Röntgenmikroskop gemäß einem der Ansprüche 1 bis 8, **dadurch gekennzeichnet, dass** das Röntgenmikroskop eine optische Achse aufweist, wobei erster, zweiter und dritter Spiegel (S1, S2, S3) des Mikroskops zentriert zur optischen Achse (HA) angeordnet sind.

**10.** Reflektives Röntgenmikroskop gemäß einem der Ansprüche 1 bis 8, **dadurch gekennzeichnet, dass** das Röntgenmikroskop eine optische Achse aufweist, wobei erster, zweiter, dritter und vierter Spiegel (S1, S2, S3, S4) des Mikroskops zentriert zur optischen Achse (HA) angeordnet sind.

**11.** Reflektives Röntgenmikroskop gemäß einem der Ansprüche 1 bis 10,

**dadurch gekennzeichnet, dass** das Objekt in der Objektebene (1) dezentriert zur und vorzugsweise nahe der optischen Achse (HA) angeordnet ist.

**12.** Reflektives Röntgenmikroskop gemäß einem der Ansprüche 1 bis 11, **dadurch gekennzeichnet, dass** eine Aperturblende (B) dezentriert zur optischen Achse 8HA) vorgesehen ist.

**13.** Reflektions-Röntgenmikroskop gemäß Anspruch 12, **dadurch gekennzeichnet, dass** die Aperturblende (b) im Strahlengang von der Objekt(1)- zur Bildebene (3) nach der Objektebene (1) und vor dem ersten Spiegel (S1) angeordnet ist.

**Claims**

**1.** A reflective X-ray microscope for examining an object in reflection in an object plane, with the object being illuminated with a radiation of a wavelength < 100 nm, especially < 30 nm, and is projected to an image plane in an enlarged manner, comprising a first subsystem arranged in the beam path from the object plane (1) to the image plane (3) and comprising a first mirror (S1) and a second mirror (S2), **characterized in that** the reflective X-ray microscope comprises a second subsystem downstream of the first subsystem in the beam path, which second subsystem comprises at least a third mirror (S3).

**2.** A reflective X-ray microscope according to claim 1, **characterized in that** the first mirror (S1) is a concave mirror and the second mirror (S2) is a convex mirror.

**3.** A reflective X-ray microscope according to claim 1, **characterized in that** the first mirror (S1) is a concave mirror and the second mirror (S2) is a concave mirror.

**4.** A reflective X-ray microscope according to one of the claims 1 to 3, **characterized in that** the second subsystem comprises a third (S3) and fourth mirror (S4).

**5.** A reflective X-ray microscope according to claim 4, **characterized in that** the third (S3) and the fourth mirror (S4) are each a concave mirror.

**6.** A reflective X-ray microscope according to claim 4, **characterized in that** the third mirror (S3) is a convex mirror and the fourth mirror (S4) is a concave mirror.

**7.** A reflective X-ray microscope according to one of the claims 1 to 6, **characterized in that** the X-ray microscope has a magnification of $\beta \geq 50$ x, preferably in the range of $100$ x $\geq \beta \geq 1000$ x.

**8.** A reflective X-ray microscope according to one of the claims 1 to 7, **characterized in that** a real intermediate image is projected to an intermediate image plane in the beam path from the object plane to the image plane.

**9.** A reflective X-ray microscope according to one of the claims 1 to 8, **characterized in that** the X-ray microscope comprises an optical axis, with a first, second and third mirror (S1, S2, S3) of the microscope being arranged in a centered manner relative to the optical axis (HA).

**10.** A reflective X-ray microscope according to one of the claims 1 to 8, **characterized in that** the X-ray microscope comprises an optical axis, with a first, second, third and fourth mirror (S1, S2, S3, S4) of the microscope being arranged in a centered manner relative to the optical axis (HA).

**11.** A reflective X-ray microscope according to one of the claims 1 to 10, **characterized in that** the object is arranged in the object plane (1) in a decentered manner relative and preferably close to the optical axis (HA).

**12.** A reflective X-ray microscope according to one of the claims 1 to 11, **characterized in that** an aperture stop (B) is provided in a decentered manner relative to the optical axis (HA).

**13.** A reflective X-ray microscope according to claim 12, **characterized in that** the aperture stop (b) is arranged in the beam path from the object plane (1) to the image plane (3) after the object plane (1) and before the first mirror (S1).

**Revendications**

**1.** Microscope à rayons X à réflexion pour l'examen d'un objet par réflexion dans un plan d'objet, lequel objet est exposé à un rayonnement d'une longueur d'ondes inférieure à 100 nm, en particulier inférieure à 30 nm, et représenté agrandi dans un plan d'image, avec
un premier sous-système disposé dans le trajet des rayons du plan d'objet (1) au plan
d'image (3), comprenant un premier miroir (S1) et un deuxième miroir (S2), **caractérisé en ce que** le microscope à rayons X à réflexion comprend un deuxième sous-système situé en aval du premier sous-système dans le trajet des rayons, qui présente au moins un troisième miroir (S3).

**2.** Microscope à rayons X à réflexion selon la revendication 1, **caractérisé en ce que** le premier miroir (S1) est un miroir concave et le deuxième miroir (S2) un miroir convexe.

**3.** Microscope à rayons X à réflexion selon la revendication 1, **caractérisé en ce que** le premier miroir (S1) est un miroir concave et le deuxième miroir (S2) un miroir concave.

**4.** Microscope à rayons X à réflexion selon l'une des revendications 1 à 3, **caractérisé en ce que** le deuxième sous-système comprend un troisième miroir (S3) et un quatrième (S4).

**5.** Microscope à rayons X à réflexion selon la revendication 4, **caractérisé en ce que** le troisième miroir (S3) et le quatrième (S4) sont des miroirs concaves.

**6.** Microscope à rayons X à réflexion selon la revendication 4, **caractérisé en ce que** le troisième miroir (S3) est un miroir convexe et le quatrième miroir (S4) un miroir concave.

**7.** Microscope à rayons X à réflexion selon l'une des revendications 1 à 6, **caractérisé en ce que** le microscope à rayons X présente un grossissement $\beta \geq 50$x, de préférence de l'ordre de $100$x $\leq \beta \leq 1000$x.

**8.** Microscope à rayons X à réflexion selon l'une des revendications 1 à 7, **caractérisé en ce qu'**une image réelle intermédiaire est formée dans un plan d'image intermédiaire dans le trajet des rayons entre le plan d'objet et le plan d'image.

**9.** Microscope à rayons X à réflexion selon l'une des revendications 1 à 8, **caractérisé en ce que** le microscope à rayons X présente un axe optique, les premier, deuxième et troisième miroirs (S1, S2, S3) du microscope étant centrés par rapport à l'axe optique (HA).

**10.** Microscope à rayons X à réflexion selon l'une des revendications 1 à 8, **caractérisé en ce que** le microscope à rayons X présente un axe optique, les premier, deuxième, troisième et quatrième miroirs (S1, S2, S3, S4) du microscope étant centrés par rapport à l'axe optique (HA).

**11.** Microscope à rayons X à réflexion selon l'une des revendications 1 à 10, **caractérisé en ce que** l'objet est décentré dans le plan d'objet (1) et disposé de préférence près de l'axe optique (HA).

**12.** Microscope à rayons X à réflexion selon l'une des revendications 1 à 11, **caractérisé en ce qu'**il est prévu un diaphragme d'ouverture (B) décentré par rapport à l'axe optique (HA).

13. Microscope à rayons X à réflexion selon la revendication 12, **caractérisé en ce que** le diaphragme d'ouverture (B) est disposé dans le trajet des rayons du plan d'objet (1) au plan d'image (3) après le plan d'objet (1) et avant le premier miroir (S1).

## Fig.1

EP 1 446 813 B1

# TABELLE 1A

LENS NOTES:

```
Notes...
    β'= -500
    konkav-konvex-konkav
```

GENERAL LENS DATA:

| | | |
|---|---|---|
| Surfaces | : | 7 |
| Stop | : | 3 |
| System Aperture | : | Object Space NA = 0.1672 |
| Glass Catalogs | : | schott |
| Ray Aiming | : | Real Reference, Cache On |
| X Pupil shift | : | 0 |
| Y Pupil shift | : | 0 |
| Z Pupil shift | : | 0 |
| Apodization | : | Uniform, factor = 0.00000E+000 |
| Effective Focal Length | : | 234.2387 (in air) |
| Effective Focal Length | : | 234.2387 (in image space) |
| Back Focal Length | : | -112265.6 |
| Total Track | : | 2333 |
| Image Space F/# | : | 1.482005 |
| Paraxial Working F/# | : | 1474.167 |
| Working F/# | : | 1497.046 |
| Image Space NA | : | 0.0003391746 |
| Object Space NA | : | 0.1672 |
| Stop Radius | : | 79.02767 |
| Paraxial Image Height | : | 19.03943 |
| Paraxial Magnification | : | -500 |
| Entrance Pupil Diameter | : | 158.0553 |
| Entrance Pupil Position | : | 325.5 |
| Exit Pupil Diameter | : | 79.52777 |
| Exit Pupil Position | : | 117421.5 |
| Field Type | : | Object height in Millimeters |
| Maximum Field | : | 0.03807887 |
| Primary Wave | : | 0.0135 |
| Lens Units | : | Millimeters |
| Angular Magnification | : | -1.987423 |

Fields            : 8
Field Type: Object height in Millimeters

| # | X-Value | Y-Value | Weight |
|---|---|---|---|
| 1 | 0.000000 | -0.005000 | 1.000000 |
| 2 | 0.000000 | -0.012500 | 1.000000 |
| 3 | 0.000000 | -0.020000 | 1.000000 |
| 4 | 0.000000 | -0.027500 | 1.000000 |
| 5 | 0.000000 | -0.035000 | 1.000000 |
| 6 | 0.015000 | -0.005000 | 1.000000 |
| 7 | 0.015000 | -0.020000 | 1.000000 |
| 8 | 0.015000 | -0.035000 | 1.000000 |

Vignetting Factors

| # | VDX | VDY | VCX | VCY | VAN |
|---|---|---|---|---|---|
| 1 | 0.000000 | 0.000000 | 0.000000 | 0.000000 | 0.000000 |
| 2 | 0.000000 | 0.000000 | 0.000000 | 0.000000 | 0.000000 |
| 3 | 0.000000 | 0.000000 | 0.000000 | 0.000000 | 0.000000 |
| 4 | 0.000000 | 0.000000 | 0.000000 | 0.000000 | 0.000000 |
| 5 | 0.000000 | 0.000000 | 0.000000 | 0.000000 | 0.000000 |
| 6 | 0.000000 | 0.000000 | 0.000000 | 0.000000 | 0.000000 |
| 7 | 0.000000 | 0.000000 | 0.000000 | 0.000000 | 0.000000 |
| 8 | 0.000000 | 0.000000 | 0.000000 | 0.000000 | 0.000000 |

Wavelengths       : 1
Units: Microns.

| # | Value | Weight |
|---|---|---|
| 1 | 0.013500 | 1.000000 |

# TABELLE 1B

LENS NOTES:

    Notes...
     B'= -500
    konkav-konvex-konkav

SURFACE DATA SUMMARY:

| Surf | Type | Comment | Radius | Thickness | Glass | Diameter | Conic |
|------|------|---------|--------|-----------|-------|----------|-------|
| OBJ | STANDARD | OBJEKTEBENE-OE | Infinity | 140.5 | | 0.07615773 | 0 |
| 1 | STANDARD | HILFSFLÄCHE | Infinity | 325.5 | | 47.70722 | 0 |
| 2 | STANDARD | HILFSFLÄCHE | Infinity | 0 | | 158.0553 | 0 |
| STO | STANDARD | BLENDE | Infinity | 370 | | 158.0553 | 0 |
| 4 | EVENASPH | 1.SPIEGEL | -500 | -352.5 | MIRROR | 276.962 | 0 |
| 5 | EVENASPH | 2.SPIEGEL | -3.5 | 1990 | MIRROR | 1.385541 | 0 |
| 6 | EVENASPH | 3.SPIEGEL | -4000 | -2000 | MIRROR | 38.53955 | 0 |
| A | STANDARD | BILDEBENE-BE | Infinity | | | 38.80791 | 0 |

18

# TABELLE 1C

LENS NOTES:

    Notes...
    B'= -500
    konkav-konvex-konkav

SURFACE DATA DETAIL:

Surface OBJ       : STANDARD
  Comment         : OBJEKTEBENE-OE
  Aperture        : Rectangular Aperture
  X Half Width    :              0.015
  Y Half Width    :        .     0.015
  X- Decenter     :                    0
  Y- Decenter     :              -0.02
Surface    1      : STANDARD
  Comment         : HILFSFLÄCHE
  Aperture        : Rectangular Aperture
  X Half Width    :             30
  Y Half Width    :             15
  X- Decenter     :                    0
  Y- Decenter     :              -20.64
Surface    2      : STANDARD
  Comment         : HILFSFLÄCHE
  Aperture        : Circular Aperture
  Minimum Radius  :              0
  Maximum Radius  :             30
  X- Decenter     :                    0
  Y- Decenter     :              -48.98
Surface STO       : STANDARD
  Comment         : BLENDE
Surface   4       : EVENASPH
  Comment         : 1.SPIEGEL
  Coeff on r  2   :  -4.8307125e-006
  Coeff on r  4   :   1.507674e-010
  Coeff on r  6   :   5.954906e-016
  Coeff on r  8   :   9.963594e-022
  Coeff on r 10   :  -6.0635175e-027
  Coeff on r 12   :   9.0583726e-031
  Coeff on r 14   :              0
  Coeff on r 16   :              0
Surface   5       : EVENASPH
  Comment         : 2.SPIEGEL
  Coeff on r  2   :   -0.0029715707
  Coeff on r  4   :   0.00095749309
  Coeff on r  6   :   0.0054995085
  Coeff on r  8   :    -0.01948431
  Coeff on r 10   :    0.047391254
  Coeff on r 12   :   -0.081392844
  Coeff on r 14   :    0.083806863
  Coeff on r 16   :   -0.034839904
Surface   6       : EVENASPH
  Comment         : 3.SPIEGEL
  Coeff on r  2   :   1.6464231e-006
  Coeff on r  4   :   5.7633466e-009
  Coeff on r  6   :  -1.317449e-011
  Coeff on r  8   :   4.0280325e-014
  Coeff on r 10   :  -7.0734665e-017
  Coeff on r 12   :   5.3017923e-020
  Coeff on r 14   :              0
  Coeff on r 16   :              0
Surface IMA       : STANDARD
  Comment         : BILDEBENE-BE

Fig.2

# TABELLE 2A

LENS NOTES:

```
    Notes...
    β'=354'
    konkav-konvex-konkav-konkav
```

GENERAL LENS DATA:

```
Surfaces                    :                 7
Stop                        :                 3
System Aperture             : Object Space NA = 0.1672
Glass Catalogs              : schott
Ray Aiming                  : Real Reference, Cache On
  X Pupil shift             :                 0
  Y Pupil shift             :                 0
  Z Pupil shift             :                 0
Apodization                 :Uniform, factor =   0.00000E+000
Effective Focal Length      :         -15.36043 (in air)
Effective Focal Length      :         -15.36043 (in image space)
Back Focal Length           :          3582.062
Total Track                 :              3013
Image Space F/#             :        0.01442053
Paraxial Working F/#        :          1043.713
Working F/#                 :          994.9058
Image Space NA              :       0.0004790589
Object Space NA             :            0.1672
Stop Radius                 :          532.5889
Paraxial Image Height       :          13.47995
Paraxial Magnification      :          354.0009
Entrance Pupil Diameter     :          1065.178
Entrance Pupil Position     :              3000
Exit Pupil Diameter         :           5.20994
Exit Pupil Position         :         -5445.013
Field Type                  : Object height in Millimeters
Maximum Field               :        0.03807887
Primary Wave                :            0.0135
Lens Units                  : Millimeters
Angular Magnification       :         -204.4511
```

Fields        : 8
Field Type: Object height in Millimeters

| # | X-Value | Y-Value | Weight |
|---|---------|---------|--------|
| 1 | 0.000000 | 0.005000 | 1.000000 |
| 2 | 0.000000 | 0.012500 | 1.000000 |
| 3 | 0.000000 | 0.020000 | 1.000000 |
| 4 | 0.000000 | 0.027500 | 1.000000 |
| 5 | 0.000000 | 0.035000 | 1.000000 |
| 6 | 0.015000 | 0.005000 | 1.000000 |
| 7 | 0.015000 | 0.020000 | 1.000000 |
| 8 | 0.015000 | 0.035000 | 1.000000 |

Vignetting Factors

| # | VDX | VDY | VCX | VCY | VAN |
|---|-----|-----|-----|-----|-----|
| 1 | 0.000000 | 0.000000 | 0.000000 | 0.000000 | 0.000000 |
| 2 | 0.000000 | 0.000000 | 0.000000 | 0.000000 | 0.000000 |
| 3 | 0.000000 | 0.000000 | 0.000000 | 0.000000 | 0.000000 |
| 4 | 0.000000 | 0.000000 | 0.000000 | 0.000000 | 0.000000 |
| 5 | 0.000000 | 0.000000 | 0.000000 | 0.000000 | 0.000000 |
| 6 | 0.000000 | 0.000000 | 0.000000 | 0.000000 | 0.000000 |
| 7 | 0.000000 | 0.000000 | 0.000000 | 0.000000 | 0.000000 |
| 8 | 0.000000 | 0.000000 | 0.000000 | 0.000000 | 0.000000 |

Wavelengths     : 1
Units: Microns

| # | Value | Weight |
|---|-------|--------|
| 1 | 0.013500 | 1.000000 |

# TABELLE 2B

LENS NOTES:

    Notes...
    n:=354
    konkav-konvex-konkav-konkav

SURFACE DATA SUMMARY:

| Surf | Type | Comment | Radius | Thickness | Glass | Diameter | Conic |
|---|---|---|---|---|---|---|---|
| OBJ | STANDARD | | Infinity | 140.5 | | 0.07615773 | 0 |
| 1 | STANDARD | HILFSFLACHE | Infinity | 3000 | | 47.72672 | 0 |
| 2 | STANDARD | HILFSFLACHE | Infinity | 0 | | 1065.179 | 0 |
| STO | EVENASPH | BLENDE | -2500 | -1997 | MIRROR | 1046.393 | 0 |
| 4 | EVENASPH | | -166 | 1000 | MIRROR | 39.11943 | 0 |
| 5 | EVENASPH | | -50 | -1010 | MIRROR | 2.082316 | 0 |
| 6 | EVENASPH | | 2000 | 2020 | MIRROR | 40 | 0 |
| IMA | STANDARD | | Infinity | | | 100 | 0 |

22

# TABELLE 2C

```
LENS NOTES:

     Notes...
     ß'=354
     konkav-konvex-konkav-konkav


SURFACE DATA DETAIL:

     Surface OBJ        : STANDARD
      Aperture          : Rectangular Aperture
       X Half Width     :          0.015
       Y Half Width     :          0.015
       X- Decenter      :              0
       Y- Decenter      :           0.02
     Surface   1        : STANDARD
      Comment           : HILFSFLÄCHE
      Aperture          : Rectangular Aperture
       X Half Width     :             30
       Y Half Width     :             15
       X- Decenter      :              0
       Y- Decenter      :         -20.64
     Surface   2        : STANDARD
      Comment           : HILFSFLÄCHE
      Aperture          : Circular Aperture
       Minimum Radius   :              0
       Maximum Radius   :         198.75
       X- Decenter      :              0
       Y- Decenter      :        -331.25
     Surface STO        : EVENASPH
      Comment           : BLENDE
      Coeff on r   2    :  -1.7434327e-007
      Coeff on r   4    :   3.1374279e-013
      Coeff on r   6    :   5.3355533e-020
      Coeff on r   8    :  -8.5318118e-028
      Coeff on r  10    :   2.8646746e-032
      Coeff on r  12    :  -4.1365345e-039
      Coeff on r  14    :              0
      Coeff on r  16    :              0
     Surface   4        : EVENASPH
      Coeff on r   2    :   3.3019781e-006
      Coeff on r   4    :   3.6808025e-008
      Coeff on r   6    :   1.7049583e-012
      Coeff on r   8    :  -2.0350022e-015
      Coeff on r  10    :   5.2988305e-018
      Coeff on r  12    :  -1.4240788e-021
      Coeff on r  14    :              0
      Coeff on r  16    :              0
     Surface   5        : EVENASPH
      Coeff on r   2    :      0.0031086973
      Coeff on r   4    :   6.1575983e-005
      Coeff on r   6    :     -0.0012869219
      Coeff on r   8    :      0.0073299418
      Coeff on r  10    :      -0.020602843
      Coeff on r  12    :      -0.024688225
      Coeff on r  14    :     -0.0012519234
      Coeff on r  16    :      -0.014071763
      Aperture          : Floating Aperture
       Maximum Radius   :       1.041158
     Surface   6        : EVENASPH
      Coeff on r   2    :  -6.5912756e-005
      Coeff on r   4    :  -1.5574759e-008
      Coeff on r   6    :  -4.7738429e-010
      Coeff on r   8    :   7.5143917e-012
      Coeff on r  10    :  -6.5517905e-014
      Coeff on r  12    :   2.2254561e-016
      Coeff on r  14    :              0
      Coeff on r  16    :              0
      Aperture          : Floating Aperture
       Maximum Radius   :             20
     Surface IMA        : STANDARD

COATING DEFINITIONS:
```

EP 1 446 813 B1

## Fig.3

# TABELLE 3A

LENS NOTES:

```
        Notes...
        β = 530
        konkav - konvex - konkav - konkav
```

GENERAL LENS DATA:

| | | |
|---|---|---|
| Surfaces | : | 8 |
| Stop | : | 2 |
| System Aperture | : | Object Space NA = 0.1672 |
| Glass Catalogs | : | schott |
| Ray Aiming | : | Real Reference, Cache On |
| X Pupil shift | : | 0 |
| Y Pupil shift | : | 0 |
| Z Pupil shift | : | 0 |
| Apodization | : | Uniform, factor = 0.00000E+000 |
| Effective Focal Length | : | -80.6423 (in air) |
| Effective Focal Length | : | -80.6423 (in image space) |
| Back Focal Length | : | -35555.39 |
| Total Track | : | 2815.61 |
| Image Space F/# | : | 0.2828798 |
| Paraxial Working F/# | : | 1562.617 |
| Working F/# | : | 1576.998 |
| Image Space NA | : | 0.000319976 |
| Object Space NA | : | 0.1672 |
| Stop Radius | : | 142.5381 |
| Paraxial Image Height | : | 20.1818 |
| Paraxial Magnification | : | 530 |
| Entrance Pupil Diameter | : | 285.0762 |
| Entrance Pupil Position | : | 700 |
| Exit Pupil Diameter | : | 27.35677 |
| Exit Pupil Position | : | -42950.12 |
| Field Type | : | Object height in Millimeters |
| Maximum Field | : | 0.03807897 |
| Primary Wave | : | 0.0135 |
| Lens Units | : | Millimeters |
| Angular Magnification | : | -10.42068 |

Fields : 8
Field Type: Object height in Millimeters

| # | X-Value | Y-Value | Weight |
|---|---|---|---|
| 1 | 0.000000 | 0.005000 | 1.000000 |
| 2 | 0.000000 | 0.012500 | 1.000000 |
| 3 | 0.000000 | 0.020000 | 1.000000 |
| 4 | 0.000000 | 0.027500 | 1.000000 |
| 5 | 0.000000 | 0.035000 | 1.000000 |
| 6 | 0.015000 | 0.005000 | 1.000000 |
| 7 | 0.015000 | 0.020000 | 1.000000 |
| 8 | 0.015000 | 0.035000 | 1.000000 |

Vignetting Factors

| # | VDX | VDY | VCX | VCY | VAN |
|---|---|---|---|---|---|
| 1 | 0.000000 | 0.000000 | 0.000000 | 0.000000 | 0.000000 |
| 2 | 0.000000 | 0.000000 | 0.000000 | 0.000000 | 0.000000 |
| 3 | 0.000000 | 0.000000 | 0.000000 | 0.000000 | 0.000000 |
| 4 | 0.000000 | 0.000000 | 0.000000 | 0.000000 | 0.000000 |
| 5 | 0.000000 | 0.000000 | 0.000000 | 0.000000 | 0.000000 |
| 6 | 0.000000 | 0.000000 | 0.000000 | 0.000000 | 0.000000 |
| 7 | 0.000000 | 0.000000 | 0.000000 | 0.000000 | 0.000000 |
| 8 | 0.000000 | 0.000000 | 0.000000 | 0.000000 | 0.000000 |

Wavelengths : 1
Units: Microns

| # | Value | Weight |
|---|---|---|
| 1 | 0.013500 | 1.000000 |

# TABELLE 3B

LENS NOTES:

    Notes...
    ß'= 530
    konkav - konvex - konkav - konkav

SURFACE DATA SUMMARY:

| urf | Type | Comment | Radius | Thickness | Glass | Diameter | Conic |
|-----|------|---------|--------|-----------|-------|----------|-------|
| OBJ | STANDARD | OBJEKT-EBENE | Infinity | 140.5 | | 0.07615773 | 0 |
| 1 | STANDARD | HILFSFLÄCHE | Infinity | 700 | | 47.71745 | 0 |
| STO | STANDARD | BLENDE | Infinity | 300 | | 285.0762 | 0 |
| 3 | STANDARD | HILFSFLÄCHE | Infinity | 0 | | 386.8558 | 0 |
| 4 | EVENASPH | 1.SPIEGEL | -500 | -285.69 | MIRROR | 374.3561 | 0 |
| 5 | EVENASPH | 2.SPIEGEL | -50 | 2081.3 | MIRROR | 30.41275 | 0 |
| 6 | STANDARD | 3.SPIEGEL-SPHÄR. | -166 | -2000 | MIRROR | 3.0007 | 0 |
| 7 | EVENASPH | 4.SPIEGEL | 4000 | 2020 | MIRROR | 39.28856 | 0 |
| IMA | STANDARD | BILD-EBENE | Infinity | | | 40.26898 | 0 |

# TABELLE 3C

```
LENS NOTES:

        Notes...
        B ' = 530 .
        konkav - konvex - konkav - konkav

SURFACE DATA DETAIL:

Surface OBJ      : STANDARD
  Comment        : OBJEKT-EBENE
  Aperture       : Rectangular Aperture
  X Half Width   :              0.015
  Y Half Width   :              0.015
  X- Decenter    :                  0
  Y- Decenter    :               0.03
Surface    1     : STANDARD
  Comment        : HILFSFLÄCHE
  Aperture       : Rectangular Aperture
  X Half Width   :                 30
  Y Half Width   :                 15
  X- Decenter    :                  0
  Y- Decenter    :             -20.64
Surface STO      : STANDARD
  Comment        : BLENDE
Surface    3     : STANDARD
  Comment        : HILFSFLÄCHE
  Aperture       : Circular Aperture
  Minimum Radius :                  0
  Maximum Radius :                 73
  X- Decenter    :                  0
  Y- Decenter    :            -119.87
Surface    4     : EVENASPH
  Comment        : 1.SPIEGEL
  Coeff on r  2  :    -2.4617005e-005
  Coeff on r  4  :     2.611535e-010
  Coeff on r  6  :     1.5508187e-015
  Coeff on r  8  :    -1.1008112e-020
  Coeff on r 10  :     4.8365227e-026
  Coeff on r 12  :     1.7895774e-030
  Coeff on r 14  :                  0
  Coeff on r 16  :                  0
Surface    5     : EVENASPH
  Comment        : 2.SPIEGEL
  Coeff on r  2  :      7.36621e-006
  Coeff on r  4  :     6.6871564e-007
  Coeff on r  6  :     2.6494143e-009
  Coeff on r  8  :    -1.063463e-011
  Coeff on r 10  :     1.4770529e-014
  Coeff on r 12  :     5.4578804e-018
  Coeff on r 14  :                  0
  Coeff on r 16  :                  0
Surface    6     : STANDARD
  Comment        : 3.SPIEGEL-SPHÄR.
Surface    7     : EVENASPH
  Comment        : 4.SPIEGEL
  Coeff on r  2  :    -4.6390308e-007
  Coeff on r  4  :     2.9425212e-009
  Coeff on r  6  :    -8.911427e-012
  Coeff on r  8  :     1.9486952e-014
  Coeff on r 10  :    -3.024605e-017
  Coeff on r 12  :     2.3357399e-020
  Coeff on r 14  :                 .0
  Coeff on r 16  :                  0
Surface IMA      : STANDARD
  Comment        : BILD-EBENE

COATING DEFINITIONS:
```

Fig.4

# TABELLE 4A

LENS NOTES:

Notes... β'=500
konkav-konvex-konkav-konkav,· Spiegel 3 und 4 sphärisch

GENERAL LENS DATA:

| | | |
|---|---|---|
| Surfaces | : | 8 |
| Stop | : | 3 |
| System Aperture | : | Object Space NA = 0.1672 |
| Glass Catalogs | : | schott |
| Ray Aiming | : | Real Reference, Cache On |
| X Pupil shift | : | 0 |
| Y Pupil shift | : | 0 |
| Z Pupil shift | : | 0 |
| Apodization | : | Uniform, factor = 0.00000E+000 |
| Effective Focal Length | : | -70.30086 (in air) |
| Effective Focal Length | : | -70.30086 (in image space) |
| Back Focal Length | : | -28049.43 |
| Total Track | : | 2508.5 |
| Image Space F/# | : | 0.4447864 |
| Paraxial Working F/# | : | 1474.167 |
| Working F/# | : | 1495.231 |
| Image Space NA | : | 0.0003391745 |
| Object Space NA | : | 0.1672 |
| Stop Radius | : | 79.02767 |
| Paraxial Image Height | : | 19.03943 |
| Paraxial Magnification | : | 500 |
| Entrance Pupil Diameter | : | 158.0553 |
| Entrance Pupil Position | : | 325.5 |
| Exit Pupil Diameter | : | 23.85146 |
| Exit Pupil Position | : | -35178.54 |
| Field Type | : | Object height in Millimeters |
| Maximum Field | : | 0.03807887 |
| Primary Wave | : | 0.0135 |
| Lens Units | : | Millimeters |
| Angular Magnification | : | -6.626653 |

Fields : 8
Field Type: Object height in Millimeters

| # | X-Value | Y-Value | Weight |
|---|---|---|---|
| 1 | 0.000000 | 0.005000 | 1.000000 |
| 2 | 0.000000 | 0.012500 | 1.000000 |
| 3 | 0.000000 | 0.020000 | 1.000000 |
| 4 | 0.000000 | 0.027500 | 1.000000 |
| 5 | 0.000000 | 0.035000 | 1.000000 |
| 6 | 0.015000 | 0.005000 | 1.000000 |
| 7 | 0.015000 | 0.020000 | 1.000000 |
| 8 | 0.015000 | 0.035000 | 1.000000 |

Vignetting Factors

| # | VDX | VDY | VCX | VCY | VAN |
|---|---|---|---|---|---|
| 1 | 0.000000 | 0.000000 | 0.000000 | 0.000000 | 0.000000 |
| 2 | 0.000000 | 0.000000 | 0.000000 | 0.000000 | 0.000000 |
| 3 | 0.000000 | 0.000000 | 0.000000 | 0.000000 | 0.000000 |
| 4 | 0.000000 | 0.000000 | 0.000000 | 0.000000 | 0.000000 |
| 5 | 0.000000 | 0.000000 | 0.000000 | 0.000000 | 0.000000 |
| 6 | 0.000000 | 0.000000 | 0.000000 | 0.000000 | 0.000000 |
| 7 | 0.000000 | 0.000000 | 0.000000 | 0.000000 | 0.000000 |
| 8 | 0.000000 | 0.000000 | 0.000000 | 0.000000 | 0.000000 |

Wavelengths : 1
Units: Microns

| # | Value | Weight |
|---|---|---|
| 1 | 0.013500 | 1.000000 |

# TABELLE 4B

LENS NOTES:

      Notes... B'=500
        konkav-konvex-konkav-konkav,   Spiegel 3 und 4 sphärisch

SURFACE DATA SUMMARY:

| Surf | Type | Comment | Radius | Thickness | Glass | Diameter | Conic |
|------|------|---------|--------|-----------|-------|----------|-------|
| OBJ | STANDARD | OBJEKT-EBENE | Infinity | 140.5 | | 0.07615773 | 0 |
| 1 | STANDARD | HILFSFLÄCHE | Infinity | 325.5 | | 47.70722 | 0 |
| 2 | STANDARD | HILFSFLÄCHE | Infinity | 0 | | 158.0553 | 0 |
| STO | STANDARD | BLENDE | Infinity | 370 | | 158.0553 | 0 |
| 4 | EVENASPH | 1.SPIEGEL | -500 | -305 | MIRROR | 276.6939 | 0 |
| 5 | EVENASPH | 2.SPIEGEL | -100 | 2108 | MIRROR | 24.81398 | 0 |
| 6 | STANDARD | 3.SPIEGEL-SPHÄR. | -216 | -2000 | MIRROR | 3.494166 | 0 |
| 7 | STANDARD | 4.SPIEGEL-SPHÄR. | 4000 | 2010 | MIRROR | 37.08851 | 0 |
| IMA | STANDARD | BILD-EBENE | Infinity | | | 37.94685 | 0 |

# TABELLE 4C

LENS NOTES:

     Notes... ß´=500
     konkav-konvex-konkav-konkav, Spiegel 3 und 4 sphärisch

SURFACE DATA DETAIL:

```
Surface OBJ       : STANDARD
 Comment          : OBJEKT-EBENE
 Aperture         : Rectangular Aperture
 X Half Width     :           0.015
 Y Half Width     :           0.015
 X- Decenter      :                   0
 Y- Decenter      :              +0.02
Surface    1      : STANDARD
 Comment          : HILFSFLÄCHE
 Aperture         : Rectangular Aperture
 X Half Width     :           30
 Y Half Width     :           15
 X- Decenter      :                   0
 Y- Decenter      :              -20.64
Surface    2      : STANDARD
 Comment          : HILFSFLÄCHE
 Aperture         : Circular Aperture
 Minimum Radius   :           0
 Maximum Radius   :           30
 X- Decenter      :                   0
 Y- Decenter      :              -48.98
Surface STO       : STANDARD
 Comment          : BLENDE
Surface    4      : EVENASPH
 Comment          : 1.SPIEGEL
 Coeff on r  2    :   -4.6103352e-005
 Coeff on r  4    :    4.5797537e-011
 Coeff on r  6    :    1.086501e-015
 Coeff on r  8    :   -3.224814e-020
 Coeff on r 10    :    1.7635536e-026
 Coeff on r 12    :    1.8446481e-029
 Coeff on r 14    :                   0
 Coeff on r 16    :                   0
Surface    5      : EVENASPH
 Comment          : 2.SPIEGEL
 Coeff on r  2    :      -0.0033081204
 Coeff on r  4    :   -1.5505972e-007
 Coeff on r  6    :    1.713275e-009
 Coeff on r  8    :   -1.0034183e-011
 Coeff on r 10    :    1.1489741e-014
 Coeff on r 12    :    4.6187442e-017
 Coeff on r 14    :                   0
 Coeff on r 16    :                   0
Surface    6      : STANDARD
 Comment          : 3.SPIEGEL-SPHÄR.
Surface    7      : STANDARD
 Comment          : 4.SPIEGEL-SPHÄR.
Surface IMA       : STANDARD
 Comment          : BILD-EBENE
```

COATING DEFINITIONS:

31

Fig.5

# TABELLE 5C

LENS NOTES:

      Notes... $\beta' = 500$
      konkav-konvex-konkav-konkav, Spiegel 3 und 4 sphärisch
      Objektfeld:2x=200µm, y=5µm-100µm mit Wellenfrontfehler <20mλ

SURFACE DATA DETAIL:

```
Surface OBJ     : STANDARD
 Comment        : OBJEKT-EBENE
 Aperture       : Rectangular Aperture
 X Half Width   :            0.1
 Y Half Width   :            0.015
 X- Decenter    :                 0
 Y- Decenter    :            0.085
Surface   1     : STANDARD
 Comment        : HILFSFLÄCHE
 Aperture       : Rectangular Aperture
 X Half Width   :            30
 Y Half Width   :            15
 X- Decenter    :                 0
 Y- Decenter    :           -20.64
Surface   2     : STANDARD
 Comment        : HILFSFLÄCHE
 Aperture       : Circular Aperture
 Minimum Radius :            0
 Maximum Radius :            30
 X- Decenter    :                 0
 Y- Decenter    :           -48.98
Surface STO     : STANDARD
 Comment        : BLENDE
Surface   4     : EVENASPH
 Comment        : 1.SPIEGEL
 Coeff on r  2  :    -4.6094988e-005
 Coeff on r  4  :     5.1127578e-011
 Coeff on r  6  :     4.8723006e-016
 Coeff on r  8  :    -1.0557709e-020
 Coeff on r 10  :     5.2110287e-026
 Coeff on r 12  :     7.3206667e-030
 Coeff on r 14  :                 0
 Coeff on r 16  :                 0
Surface   5     : EVENASPH
 Comment        : 2.SPIEGEL
 Coeff on r  2  :     -0.0033070554
 Coeff on r  4  :    -6.8871027e-008
 Coeff on r  6  :     4.3841886e-010
 Coeff on r  8  :    -3.4827214e-012
 Coeff on r 10  :     6.0031516e-015
 Coeff on r 12  :     1.6086521e-017
 Coeff on r 14  :                 0
 Coeff on r 16  :                 0
Surface   6     : STANDARD
 Comment        : 3.SPIEGEL-SPHÄR.
Surface   7     : STANDARD
 Comment        : 4.SPIEGEL-SPHÄR.
Surface IMA     : STANDARD
 Comment        : BILD-EBENE
```

COATING DEFINITIONS:

33

Fig.6

EP 1 446 813 B1

# TABELLE 6A

```
LENS NOTES:

        Notes... ß'= -500
             Alle Spiegel konkav, Spiegel 3 und 4 sphärisch


GENERAL LENS DATA:

    Surfaces                  :                8
    Stop.      ─   ..         :                3
    System Aperture           : Object Space NA = 0.1672
    Glass Catalogs            : schott
    Ray Aiming  ·  ·          : Real Reference, Cache On
      X Pupil shift           :                0
      Y Pupil shift           :                0
      Z Pupil shift           :                0
    Apodization               :Uniform, factor =   0.00000E+000
    Effective Focal Length    :          37.39941 (in air)
    Effective Focal Length  · :          37.39941 (in image space)
    Back Focal Length         :         -11587.69
    Total Track               :           2409.22
    Image Space F/#           :          0.2366223
    Paraxial Working F/#      :           1474.167
    Working F/#               :           1492.687
    Image Space NA            :        0.0003391745
    Object Space NA           :             0.1672
    Stop Radius               :           79.02767
    Paraxial Image Height     :           19.03943
    Paraxial Magnification    :              -500
    Entrance Pupil Diameter   :           158.0553
    Entrance Pupil Position   :             325.5
    Exit Pupil Diameter       :           12.68697
    Exit Pupil Position       :          -18608.47
    Field Type                : Object height in Millimeters
    Maximum Field             :          0.03807887
    Primary Wave              :             0.0135
    Lens Units                : Millimeters
    Angular Magnification     :           12.45809


    Fields            : 8
    Field Type: Object height in Millimeters
    #        X-Value        Y-Value         Weight
    1        0.000000       0.005000        1.000000
    2        0.000000       0.012500        1.000000
    3        0.000000       0.020000        1.000000
    4        0.000000       0.027500        1.000000
    5        0.000000       0.035000        1.000000
    6        0.015000       0.005000        1.000000
    7        0.015000       0.020000        1.000000
    8        0.015000       0.035000        1.000000


    Vignetting Factors
    #     VDX        VDY        VCX        VCY        VAN
    1  0.000000   0.000000   0.000000   0.000000   0.000000
    2  0.000000   0.000000   0.000000   0.000000   0.000000
    3  0.000000   0.000000   0.000000   0.000000   0.000000
    4  0.000000   0.000000   0.000000   0.000000   0.000000
    5  0.000000   0.000000   0.000000   0.000000   0.000000
    6  0.000000   0.000000   0.000000   0.000000   0.000000
    7  0.000000   0.000000   0.000000   0.000000   0.000000
    8  0.000000   0.000000   0.000000   0.000000   0.000000


    Wavelengths       : 1
    Units: Microns
    #          Value          Weight
    1        0.013500        1.000000
```

# TABELLE 6B

LENS NOTES:

Notes... S'= -500
Alle Spiegel konkav, Spiegel 3 und 4 sphärisch

SURFACE DATA SUMMARY:

| Surf | Type | Comment | Radius | Thickness | Glass | Diameter | Conic |
|------|------|---------|--------|-----------|-------|----------|-------|
| OBJ | STANDARD | OBJEKT-EBENE | Infinity | 140.5 | | 0.07615773 | 0 |
| 1 | STANDARD | HILFSFLÄCHE | Infinity | 325.5 | | 47.70722 | 0 |
| 2 | STANDARD | HILFSFLÄCHE | Infinity | 0 | | 158.0553 | 0 |
| STO | STANDARD | BLENDE | Infinity | 370 | | 158.0553 | 0 |
| 4 | EVENASPH | 1.SPIEGEL | -500 | -404.28 | MIRROR | 277.1741 | 0 |
| 5 | EVENASPH | 2.SPIEGEL | 100 | 2108 | MIRROR | 24.79504 | 0 |
| 6 | STANDARD | 3.SPIEGEL-SPHÄR. | -216 | -1900 | MIRROR | 3.507399 | 0 |
| 7 | STANDARD | 4.SPIEGEL-SPHÄR. | 4000 | 1910 | MIRROR | 35.32319 | 0 |
| IMA | STANDARD | BILD-EBENE | Infinity | | | 37.93232 | 0 |

# TABELLE 6C

LENS NOTES:

    Notes... B'= -500
    Alle Spiegel konkav, Spiegel 3 und 4 sphärisch


SURFACE DATA DETAIL:

    Surface OBJ        : STANDARD
     Comment           : OBJEKT-EBENE
     Aperture          : Rectangular Aperture
     X Half Width      :            0.015
     Y Half Width      :         ‥  0.015
     X- Decenter       :                    0
     Y- Decenter       :                 0.02
    Surface    1       : STANDARD
     Comment           : HILFSFLÄCHE
     Aperture          : Rectangular Aperture
     X Half Width      :              30
     Y Half Width      :              15
     X- Decenter       :                    0
     Y- Decenter       :               -20.64
    Surface    2       : STANDARD
     Comment           : HILFSFLÄCHE
     Aperture          : Circular Aperture
     Minimum Radius    :               0
     Maximum Radius    :              30
     X- Decenter       :                    0
     Y- Decenter       :               -48.98
    Surface STO        : STANDARD
     Comment           : BLENDE
    Surface    4       : EVENASPH
     Comment           : 1.SPIEGEL
     Coeff on r   2    :     2.7769148e-009
     Coeff on r   4    :     2.2488572e-010
     Coeff on r   6    :     1.1599273e-015
     Coeff on r   8    :    -2.9110643e-020
     Coeff on r  10    :     1.1856427e-024
     Coeff on r  12    :    -1.6412839e-029
     Coeff on r  14    :                    0
     Coeff on r  16    :                    0
    Surface    5       : EVENASPH
     Comment           : 2.SPIEGEL
     Coeff on r   2    :        0.0027208747
     Coeff on r   4    :     3.1374819e-008
     Coeff on r   6    :     7.8315561e-010
     Coeff on r   8    :    -8.0650957e-012
     Coeff on r  10    :     3.8132831e-014
     Coeff on r  12    :    -6.7855098e-017
     Coeff on r  14    :                    0
     Coeff on r  16    :                    0
    Surface    6       : STANDARD
     Comment           : 3.SPIEGEL-SPHÄR.
    Surface    7       : STANDARD
     Comment           : 4.SPIEGEL-SPHÄR.
    Surface IMA        : STANDARD
     Comment           : BILD-EBENE

COATING DEFINITIONS:

37

Fig.7

# TABELLE 7A

LENS NOTES:

```
Notes... S'= 500
konkav-konkav-konvex-konkav
```

GENERAL LENS DATA:

| | | |
|---|---|---|
| Surfaces | : | 8 |
| Stop | : | 3 |
| System Aperture | : | Object Space NA = 0.1672 |
| Glass Catalogs | : | schott |
| Ray Aiming | : | Real Reference, Cache On |
| X Pupil shift | : | 0 |
| Y Pupil shift | : | 0 |
| Z Pupil shift | : | 0 |
| Apodization | : | Uniform, factor = 0.00000E+000 |
| Effective Focal Length | : | -196.9264 (in air) |
| Effective Focal Length | : | -196.9264 (in image space) |
| Back Focal Length | : | -91931.51 |
| Total Track | : | 2311.22 |
| Image Space F/# | : | 1.245933 |
| Paraxial Working F/# | : | 1474.167 |
| Working F/# | : | 1489.404 |
| Image Space NA | : | 0.0003391746 |
| Object Space NA | : | 0.1672 |
| Stop Radius | : | 79.02767 |
| Paraxial Image Height | : | 30.92329 |
| Paraxial Magnification | : | 500 |
| Entrance Pupil Diameter | : | 158.0553 |
| Entrance Pupil Position | : | 325.5 |
| Exit Pupil Diameter | : | 66.84893 |
| Exit Pupil Position | : | -98294.58 |
| Field Type | : | Object height in Millimeters |
| Maximum Field | : | 0.06184658 |
| Primary Wave | : | 0.0135 |
| Lens Units | : | Millimeters |
| Angular Magnification | : | -2.364366 |

Fields           : 8
Field Type: Object height in Millimeters

| # | X-Value | Y-Value | Weight |
|---|---|---|---|
| 1 | 0.000000 | 0.030000 | 1.000000 |
| 2 | 0.000000 | 0.037500 | 1.000000 |
| 3 | 0.000000 | 0.045000 | 1.000000 |
| 4 | 0.000000 | 0.052500 | 1.000000 |
| 5 | 0.000000 | 0.060000 | 1.000000 |
| 6 | 0.015000 | 0.030000 | 1.000000 |
| 7 | 0.015000 | 0.045000 | 1.000000 |
| 8 | 0.015000 | 0.060000 | 1.000000 |

Vignetting Factors

| # | VDX | VDY | VCX | VCY | VAN |
|---|---|---|---|---|---|
| 1 | 0.000000 | 0.000000 | 0.000000 | 0.000000 | 0.000000 |
| 2 | 0.000000 | 0.000000 | 0.000000 | 0.000000 | 0.000000 |
| 3 | 0.000000 | 0.000000 | 0.000000 | 0.000000 | 0.000000 |
| 4 | 0.000000 | 0.000000 | 0.000000 | 0.000000 | 0.000000 |
| 5 | 0.000000 | 0.000000 | 0.000000 | 0.000000 | 0.000000 |
| 6 | 0.000000 | 0.000000 | 0.000000 | 0.000000 | 0.000000 |
| 7 | 0.000000 | 0.000000 | 0.000000 | 0.000000 | 0.000000 |
| 8 | 0.000000 | 0.000000 | 0.000000 | 0.000000 | 0.000000 |

Wavelengths      : 1
Units: Microns

| # | Value | Weight |
|---|---|---|
| 1 | 0.013500 | 1.000000 |

# TABELLE 7B

LENS NOTES:

Notes.., ß'= 500
konkav-konkav-konvex-konkav

SURFACE DATA SUMMARY:

| | Type | Comment | Radius | Thickness | Glass | Diameter | Conic |
|---|---|---|---|---|---|---|---|
| OBJ | STANDARD | OBJEKT-EBENE | Infinity | 140.5 | | 0.1236932 | 0 |
| 1 | STANDARD | HILFSFLÄCHE | Infinity | 325.5 | | 47.74043 | 0 |
| 2 | STANDARD | HILFSFLÄCHE | Infinity | 0 | | 158.0553 | 0 |
| 3 | STANDARD | BLENDE | Infinity | 370 | | 158.0553 | 0 |
| 4 | EVENASPH | 1.SPIEGEL | -500 | -404.28 | MIRROR | 277.2035 | 0 |
| 5 | EVENASPH | 2.SPIEGEL | 100 | 2000 | MIRROR | 25.1518 | 0 |
| 6 | STANDARD | 3.SPIEGEL-SPHÄR. | 190 | -1580 | MIRROR | 4.422261 | 0 |
| 7 | STANDARD | 4.SPIEGEL-SPHÄR. | 3400 | 1600 | MIRROR | 61.67181 | 0 |
| IMA | STANDARD | BILD-EBENE | Infinity | | | 61.75582 | 0 |

# TABELLE 7C

```
LENS NOTES:

        Notes... B'= 500
        konkav-konkav-konvex-konkav


SURFACE DATA DETAIL:

Surface OBJ     : STANDARD
 Comment        : OBJEKT-EBENE
 Aperture       : Rectangular Aperture
 X Half Width   :          0.015
 Y Half Width   :          0.015
 X- Decenter    :              0
 Y- Decenter    :          0.045
Surface    1    : STANDARD
 Comment        : HILFSFLÄCHE
 Aperture       : Rectangular Aperture
 X Half Width   :             30
 Y Half Width   :             15
 X- Decenter    :              0
 Y- Decenter    :         -20.64
Surface    2    : STANDARD
 Comment        : HILFSFLÄCHE
 Aperture       : Circular Aperture
 Minimum Radius :              0
 Maximum Radius :             30
 X- Decenter    :              0
 Y- Decenter    :         -48.98
Surface STO     : STANDARD
 Comment        : BLENDE
Surface    4    : EVENASPH
 Comment        : 1.SPIEGEL
 Coeff on r  2  :     2.70268e-005
 Coeff on r  4  :     2.2512635e-010
 Coeff on r  6  :     8.2044497e-016
 Coeff on r  8  :    -7.579954e-022
 Coeff on r 10  :     1.102694e-025
 Coeff on r 12  :    -1.2494723e-030
 Coeff on r 14  :              0
 Coeff on r 16  :              0
Surface    5    : EVENASPH
 Comment        : 2.SPIEGEL
 Coeff on r  2  :     0.0026219304
 Coeff on r  4  :     4.9915565e-008
 Coeff on r  6  :     5.9995692e-011
 Coeff on r  8  :    -3.0213474e-013
 Coeff on r 10  :     4.3389295e-016
 Coeff on r 12  :     6.1610188e-019
 Coeff on r 14  :              0
 Coeff on r 16  :              0
Surface    6    : STANDARD
 Comment        : 3.SPIEGEL-SPHÄR.
Surface    7    : STANDARD
 Comment        : 4.SPIEGEL-SPHÄR.
Surface IMA     : STANDARD
 Comment        : BILD-EBENE

COATING DEFINITIONS:
```

Fig.8

S2  B        S1

1                                    3

432mm                2000mm

2432mm

EP 1 446 813 B1

# TABELLE 8A

LENS NOTES:

      Notes... ß'= 100
      konkav-konkav

GENERAL LENS DATA:

| | | |
|---|---|---|
| Surfaces | : | 6. |
| Stop | : | 3 |
| System Aperture | : | Object Space NA = 0.1672 |
| Glass Catalogs | : | schott |
| Ray Aiming | : | Real Reference, Cache On |
| X Pupil shift | : | 0 |
| Y Pupil shift | : | 0 |
| Z Pupil shift | : | 0 |
| Apodization | : | Uniform, factor = 0.00000E+000 |
| Effective Focal Length | : | -20.15204 (in air) |
| Effective Focal Length | : | -20.15204 (in image space) |
| Back Focal Length | : | 1109.829 |
| Total Track | : | 2291.4 |
| Image Space F/# | : | 0.1274999 |
| Paraxial Working F/# | : | 294.833 |
| Working F/# | : | 296.6462 |
| Image Space NA | : | 0.001695873 |
| Object Space NA | : | 0.1672 |
| Stop Radius | : | 79.02767 |
| Paraxial Image Height | : | 3.807881 |
| Paraxial Magnification | : | 99.99986 |
| Entrance Pupil Diameter | : | 158.0583 |
| Entrance Pupil Position | : | 325.5 |
| Exit Pupil Diameter | : | 6.838018 |
| Exit Pupil Position | : | -1990.643 |
| Field Type | : | Object height in Millimeters |
| Maximum Field | : | 0.03807887 |
| Primary Wave | : | 0.0135 |
| Lens Units | : | Millimeters |
| Angular Magnification | : | -23.11421 |

Fields      : 8
Field Type: Object height in Millimeters

| # | X-Value | Y-Value | Weight |
|---|---|---|---|
| 1 | 0.000000 | 0.005000 | 1.000000 |
| 2 | 0.000000 | 0.012500 | 1.000000 |
| 3 | 0.000000 | 0.020000 | 1.000000 |
| 4 | 0.000000 | 0.027500 | 1.000000 |
| 5 | 0.000000 | 0.035000 | 1.000000 |
| 6 | 0.015000 | 0.005000 | 1.000000 |
| 7 | 0.015000 | 0.020000 | 1.000000 |
| 8 | 0.015000 | 0.035000 | 1.000000 |

Vignetting Factors

| # | VDX | VDY | VCX | VCY | VAN |
|---|---|---|---|---|---|
| 1 | 0.000000 | 0.000000 | 0.000000 | 0.000000 | 0.000000 |
| 2 | 0.000000 | 0.000000 | 0.000000 | 0.000000 | 0.000000 |
| 3 | 0.000000 | 0.000000 | 0.000000 | 0.000000 | 0.000000 |
| 4 | 0.000000 | 0.000000 | 0.000000 | 0.000000 | 0.000000 |
| 5 | 0.000000 | 0.000000 | 0.000000 | 0.000000 | 0.000000 |
| 6 | 0.000000 | 0.000000 | 0.000000 | 0.000000 | 0.000000 |
| 7 | 0.000000 | 0.000000 | 0.000000 | 0.000000 | 0.000000 |
| 8 | 0.000000 | 0.000000 | 0.000000 | 0.000000 | 0.000000 |

Wavelengths     : 1
Units: Microns

| # | Value | Weight |
|---|---|---|
| 1 | 0.013500 | 1.000000 |

# TABELLE 8B

EP 1 446 813 B1

LENS NOTES:

      Notes... $\Delta' = 100$
      konkav-konkav

SURFACE DATA SUMMARY:

| rf | Type | Comment | Radius | Thickness | Glass | Diameter | Conic |
|---|---|---|---|---|---|---|---|
| OBJ | STANDARD | OBJEKT-EBENE | Infinity | 140.5 | | 0.07615773 | 0 |
| 1 | STANDARD | HILFSFLÄCHE | Infinity | 325.5 | | 47.70722 | 0 |
| 2 | STANDARD | HILFSFLÄCHE | Infinity | 0 | | 158.0553 | 0 |
| STO | STANDARD | BLENDE | Infinity | 370 | | 158.0553 | 0 |
| 4 | EVENASPH | 1.SPIEGEL | -500 | -404.1 | MIRROR | 277.4292 | 0 |
| 5 | EVENASPH | 2.SPIEGEL | 100 | 2000 | MIRROR | 6.815651 | 0 |
| IMA | STANDARD | BILD-EBENE | Infinity | | | 7.497326 | 0 |

# TABELLE 8C

LENS NOTES:

```
Notes...  B' = 100
       konkav-konkav
```

SURFACE DATA DETAIL:

```
Surface OBJ     : STANDARD
  Comment       : OBJEKT-EBENE
  Aperture      : Rectangular Aperture
  X Half Width  :        0.015
  Y Half Width  :        0.015
  X- Decenter   :            0
  Y- Decenter   :         0.02
Surface    1    : STANDARD
  Comment       : HILFSFLÄCHE
  Aperture      : Rectangular Aperture
  X Half Width  :           30
  Y Half Width  :           15
  X- Decenter   :            0
  Y- Decenter   :       -20.64
Surface    2    : STANDARD
  Comment       : HILFSFLÄCHE
  Aperture      : Circular Aperture
  Minimum Radius :           0
  Maximum Radius :          30
  X- Decenter   :           .0
  Y- Decenter   :       -48.98
Surface STO     : STANDARD
  Comment       : BLENDE
Surface    4    : EVENASPH
  Comment       : 1.SPIEGEL
  Coeff on r  2 :    6.7309527e-005
  Coeff on r  4 :    2.9082276e-010
  Coeff on r  6 :    1.7291515e-015
  Coeff on r  8 :   -6.2302432e-020
  Coeff on r 10 :    2.641037e-024
  Coeff on r 12 :   -4.1156155e-029
  Coeff on r 14 :            0
  Coeff on r 16 :            0
Surface    5    : EVENASPH
  Comment       : 2.SPIEGEL
  Coeff on r  2 :      0.021277299
  Coeff on r  4 :   -5.2803667e-006
  Coeff on r  6 :    3.6441844e-006
  Coeff on r  8 :   -5.0797445e-007
  Coeff on r 10 :    3.4653654e-008
  Coeff on r 12 :   -9.175105e-010
  Coeff on r 14 :            0
  Coeff on r 16 :            0
Surface IMA     : STANDARD
  Comment       : BILD-EBENE
```

COATING DEFINITIONS:

Fig.9

Fig.10

Fig.11

EP 1 446 813 B1

Fig.12

```
                                           ┌──────────────────┐
                                           │  Positionieren   │─── 210
                                           │ Messstelle im    │◄┐
                                           │    Messfeld      │ ┊
                                           └────────┬─────────┘ ┊
                                                    ▼           ┊
       ┌──────────────────┐              ┌──────────────────┐   ┊
       │  Eingabe der     │─── 200       │     Fokus        │─── 212
       │    System-       │              │ finden / einstellen │ ┊
       │  einstellungen   │              └────────┬─────────┘   ┊
       └────────┬─────────┘                       ▼             ┊
                ▼                        ┌──────────────────┐   ┊
       ┌──────────────────┐─── 202       │   Aufnahme       │─── 214
       │  Automatisches   │              │  Messbild bzw.   │◄┐ ┊
       │   Einstellen     │              │  Bildstapel ok?  │ ┊ ┊
       │   des Systems    │              └────────┬─────────┘ ┊ ┊
       └────────┬─────────┘                       ▼           ┊ ┊
                ▼                  216 ─ ┌──────────────────┐ ┊ ┊
       ┌──────────────────┐─── 204       │ Qualitätskontrolle│ ┊ ┊
       │  Überprüfen der  │              │  Messbild bzw.   ├─┘ ┊
       │  Systemeinstellung│             │  Bildstapel ok?  │ N ┊
       │  an Teststruktur │              └────────┬─────────┘   ┊
       └────────┬─────────┘                       ▼ J           ┊
 ┌─────────────┐         ▼            ┌──────────────────┐─── 220┊
 │Dokumentation│ ┌──────────────────┐ │    Weitere       │       ┊
 │der          │◄┤  Feinjustage des │ │  Messposition    ├┄┄┄┄┄┄┄┘
 │Meßeinstellungen│ │    Systems      │ │  vorhanden?      │ J
 └─────────────┘ └──────────────────┘ └────────┬─────────┘
       208  O      206                          ▼ N
                                      ┌──────────────────┐   ┌──────────────┐
                                      │    Andere        │   │    Ende      │
                                      │ Messeinstellungen├──►│ der Messung  │
                                      │  verwenden?      │ N └──────────────┘
                                      └────────┬─────────┘
                                               ┊ J        222        224
```

Fig. 13

```
┌─────────────────────┐
│    Messbild bzw.    │
│     Bildstapel      │──── 300
│     I (x,y,z)       │
└─────────────────────┘
           │
           ▼
┌─────────────────────┐
│     Auswahl         │──── 302
│   Analysebereich    │
│   Schnitt / Region  │        304
└─────────────────────┘
           │
           ▼
┌─────────────────────┐
│  Berechnung Daten   │
│ (z.B. Fit, Interpolation, │
│  Korrelation, glättung, │
│  Filterung, spiegelung) │
│   für darstellung   │
└─────────────────────┘
```

Bilddarstellung I(x,Y) ──── 312

Contourplot I(x,y) ──── 314

Profildarstellung für Schnitt ──── 316

Linienbreit über Defokus ──── 318

Linienbreite über Threshold ──── 320

Prozeßfenster ──── 322

Simulationsdaten zu Messdaten für Resistentwicklung ──── 324

Vergleich mehrer Messungen ──── 326

Kontrast über Defokus ──── 328

Weitere Darstellungen basierend auf Auswertungen der Meßbilder ──── 330

Darstellung ──── 310

Ausgabe von Kennzahlen zur Qualität ──── 306

EP 1 446 813 B1

Fig.14A

Fig.14B

Fig.14c

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5222113 A
- US 5311565 A
- US 5177774 A
- US 5144497 A
- US 5291339 A
- US 5131023 A
- EP 0459833 A
- US 5022064 A
- JP 2001116900 B
- US 6522717 B

- EP 1300676 A1
- EP 0628806 A
- JP 4321047 A
- US 5063586 A
- US 5153898 A
- US 4798450 A
- EP 0962830 A
- WO 0227401 A
- WO 0227402 A
- US 6244717 B